# DEMANDE DE BREVET EUROPEEN

(11) **EP 3 176 767 A1**
(43) Date de publication de la demande: **07.06.2017**
(21) Numéro de dépôt: 15003547.5
(22) Date de dépôt: 14.12.2015
(51) Int. Cl.: G08G 1/00, G06Q 10/02, G06Q 50/30, H04W 4/04

(54) **PROCEDE ET SYSTEME DE FACILITATION DES DEPLACEMENTS D'UN ENSEMBLE DE PIETONS AU MOYEN D'UN ENSEMBLE DE VEHICULES**

(30) Priorité: 04.12.2015 EP 15003451; 06.12.2015 CH 17732015; 12.12.2015 CH 18212015; 07.12.2015 FR 1502546
(71) Demandeur: Stona, Daniel, 1201 Geneve (CH)
(72) Inventeur: Stona, Daniel, 1201 Geneve (CH)

(57) **Abrégé**

L'invention concerne un procédé de facilitation des déplacements d'un ensemble Ep de piétons (P) munis chacun d'un terminal portable (TP) au moyen d'un ensemble Ev de véhicules (V) associés ou munis chacun d'un terminal (TV), ce procédé comprenant les étapes suivantes :
- envois par des piétons (P) de demandes de prise en charge ;
- envois par des véhicules (V) ou leurs conducteurs d'offres de prise en charge;
- réception par un serveur (S) des demandes et des offres de prise en charge ;
- constitution par le serveur (S) d'un ensemble Ep de piétons demandeurs (P) et d'un ensemble Ev de véhicules offreurs (V),
- recherche par le serveur (S), pour chacun des piétons (Pi) de l'ensemble Ep, d'un véhicule (Vj) de l'ensemble Ev ayant un itinéraire compatible avec celui du piéton (Pi) et formation de couples de compatibilité [piéton (Pi) ; véhicule (Vj)] ;
- pour chaque couple de compatibilité [piéton (Pi) ; véhicule (Vj)], envois au piéton (Pi) et au conducteur du véhicule (Vj) de demandes d'acceptation/refus ;
ce procédé se distinguant en ce que, pour chaque couple de compatibilité [piéton (Pi) ; véhicule (Vj)] :
- chaque demande de prise en charge comprend des données personnelles fraîches (DFPi) relatives au piéton (Pi) ;
- chaque offre de prise en charge comprend des données personnelles fraîches (DFVj) relatives au conducteur du véhicule (Vj) ;
et en ce que
- le signal de possibilité de prise en charge envoyé au piéton (Pi) comprend lesdites données personnelles fraîches (DFCj) relatives au conducteur du véhicule (Vj) ;
- le signal de possibilité de prise en charge envoyé au conducteur du véhicule (Vj) comprend lesdites données personnelles fraîches (DFPi) relatives au piéton (Pi).

## Description

L'invention concerne un procédé et un système de facilitation des déplacements d'un ensemble de piétons au moyen d'un ensemble de véhicules. Ce procédé et ce système sont destinés en particulier à des zones urbaines.

### Arrière-plan de l'invention

On connaît des systèmes de mise en relation de conducteurs et de passagers tels que celui connu sous l'appellation Blablacar®. Ces systèmes imposent aussi bien aux conducteurs qu'aux passagers de saisir, outre leurs destinations, les dates et heures de leurs voyages, et de prendre rendez-vous les uns avec les autres.

Il serait utile de disposer d'un système plus souple et plus rapide permettant à un piéton de trouver aisément un véhicule pour l'emmener à sa destination. Ce système serait encore plus intéressant s'il offrait à un conducteur souhaitant prendre un passager la possibilité de se décider au dernier moment et s'il épargnait, tant au piéton futur passager qu'au conducteur, une fastidieuse prise de rendez-vous.

Différentes solutions ont été proposées dans les demandes de brevet publiées sous les numéros EP 1 251 475, DE 10 2009 056641, DE 10 2010 003610 et WO 2013/001553.

Parmi les obstacles qui empêchent le développement de ces systèmes, on peut énumérer les suivants :
- une trop grande complication : il faut en effet proposer une solution simple si l'on souhaite qu'elle soit utilisée par un maximum de personnes, en particulier les jeunes qui sautent d'une nouveauté à l'autre, ou les personnes âgées parfois perdues face aux nouvelles technologies ;
- une réactivité insuffisance du système ;
- un manque de souplesse du système ; par exemple certains systèmes de l'art antérieur ne prévoient pas le cas où un passager pourrait être transporté sur une fraction de l'itinéraire d'un véhicule ;
- et, certainement l'obstacle le plus grand de tous, la sécurité : il va sans dire qu'il peut ne pas être rassurant de monter dans un véhicule inconnu conduit pas une personne inconnue, en particulier, dans le cas d'un conducteur (homme) et d'une passagère.

Enfin, il est impératif que ces systèmes ne perturbent pas ou du moins affectent le moins possible la circulation habituelle, qu'ils déconcentrent le moins possible les conducteurs de manière à ne pas augmenter les risques d'accident, qu'ils n'augmentent pas la consommation de carburants fossiles, en n'allongeant pas les trajets des utilisateurs, qu'ils favorisent le covoiturage et réduisent ainsi le nombre de véhicules circulation et par conséquent les émissions de gaz d'échappement qui sont pour une large part des gaz à effet de serre.

En outre, pour qu'un tel système connaisse un réel succès, il ne doit pas entraîner un surcoût pour le conducteur ou le piéton, par exemple en leur imposant d'acheter des appareils pour pouvoir mettre en oeuvre ce système.

### Exposé sommaire de l'invention

Le but majeur de l'invention est de proposer des solutions surmontant les obstacles précités. Ce but est atteint grâce à un procédé de facilitation des déplacements d'un ensemble Ep de piétons munis chacun d'un terminal TV, au moyen d'un ensemble Ev de véhicules automobiles V associés ou munis chacun d'un terminal TV, les terminaux TP et TV comportant ou étant associés à des dispositifs de détection de leurs positions courantes GLP, GLV, ce procédé comprenant les étapes suivantes :
- envois par des piétons (P) de demandes de prise en charge, chaque demande comprenant au moins la position courante GLP et la destination (DP) du piéton concerné ;
   - envois par des véhicules (V) ou leurs conducteurs d'offres de prise en charge, chaque offre comprenant au moins la position courante GLV et la destination (DV) du véhicule concerné ;
   - réception par un serveur (S) des demandes et des offres de prise en charge ;
   - constitution par le serveur (S) d'un ensemble Ep de piétons demandeurs (P),
   - constitution par le serveur (S) d'un ensemble Ev de véhicules offreurs (V),
   - recherche par le serveur (S), pour chacun des piétons (Pi) de l'ensemble Ep, d'un véhicule (Vj) de l'ensemble Ev ayant un itinéraire compatible avec celui du piéton (Pi) et formation de couples de compatibilité [piéton (Pi) ; véhicule (Vj)] ;
   - pour chaque couple de compatibilité [piéton (Pi) ; véhicule (Vj)] :
      - envoi par le serveur (S) au piéton (Pi) de chaque couple de compatibilité (piéton (Pi) ; véhicule (Vj)), un signal de possibilité de prise en charge et d'une demande d'acceptation/refus de la prise en charge ;
      - en cas d'envoi par le piéton (Pi) au serveur (S) d'une réponse de refus, retour à l'étape précédente de recherche du serveur (S) ;
      - en cas d'envoi par le piéton (Pi) d'une réponse d'acception, envoi par le serveur (S) au véhicule (Vj) ou à son conducteur, d'un signal de possibilité de prise en charge et d'une demande d'acceptation/refus de la prise en charge ;
      - en cas d'envoi par le véhicule (Vj) ou son conducteur d'une réponse de refus au serveur (S), retour à l'étape précédente de recherche du serveur (S) et envoi éventuel par le serveur (S) au piéton (Pi) d'un signal de refus de prise en charge ;
      - en cas d'envoi par le véhicule (Vj) ou son conducteur au serveur (S) d'une réponse d'acception, envoi éventuel par le serveur (S) au piéton (Pi) d'un signal de confirmation de prise en charge ;
      étant précisé que pour chaque couple de compatibilité [piéton (Pi) ; véhicule (Vj)] :

   - chaque demande de prise en charge comprend des données personnelles fraîches (DFPi) relatives au piéton (Pi) ;
   - chaque offre de prise en charge comprend des données personnelles fraîches (DFVj) relatives au conducteur du véhicule (Vj) ;
   et que
   - le signal de possibilité de prise en charge envoyé au piéton (Pi) comprend lesdites données personnelles fraîches (DFCj) relatives au conducteur du véhicule (Vj) et éventuellement des données relatives au véhicule (Vj), comme une ou plusieurs photos de ce véhicule (Vj);
   - le signal de possibilité de prise en charge envoyé au conducteur du véhicule (Vj) comprend lesdites données personnelles fraîches (DFPi) relatives au piéton (Pi).

Il va de soi que l'on pourrait soumettre la demande d'acceptation/refus en premier au conducteur puis au piéton. Il est cependant préférable de commencer par le piéton car celui-ci est à l'arrêt et peut prendre son temps, tandis que le conducteur est probablement déjà en route, c'est-à-dire en train de conduire son véhicule lorsqu'il reçoit une demande d'acceptation/refus et il convient de le déranger le moins possible.

Selon un mode de réalisation préféré, on prévoit dans le procédé selon l'invention qu'à chaque fois qu'une prise en charge est refusée, la personne qui l'a déjà acceptée (normalement le piéton) en est informée, pour éviter qu'elle soit surprise de recevoir une nouvelle proposition de prise en charge alors qu'elle vient d'en accepter une ou pour qu'elle n'attende pas indéfiniment un véhicule. Il va de soi que la personne qui reçoit la proposition de prise en charge en second lieu (normalement le conducteur) ne peut pas recevoir de refus.

Selon une variante, le piéton ou le conducteur peut désactiver de manière générale (par exemple dans les préférences de son compte) ou ponctuelle l'étape d'affichage/acception de la prise en charge. Ceci permet d'accélérer le fonctionnement du système. En effet, par exemple, un piéton pressé peut sauter cette étape en vue de gagner du temps et accepter ainsi d'être pris en charge par n'importe quel véhicule à trajet compatible.

Selon un mode de réalisation avantageux de l'invention, le procédé comprend en outre :
- une étape au cours de laquelle chaque piéton (Pi) est pris ou se prend en photo au moyen de son terminal (TP) et les données personnelles fraîches (DFPi) relatives au piéton (Pi) comprennent cette photo ;
- une étape au cours de laquelle chaque conducteur de véhicule (Vj) est pris ou se prend en photo au moyen du terminal (TV) et les données personnelles fraîches (DFVj) relatives au conducteur du véhicule (Vj) comprennent cette photo ;
- le signal de possibilité de prise en charge envoyé au véhicule (Vj) ou à son conducteur comprend en outre éventuellement l'indication du sexe du piéton (Pi) ; et
- le signal de possibilité de prise en charge envoyé au piéton (Pi) comprend en outre éventuellement l'indication du sexe du conducteur du véhicule (Vj).

La photo prise par une autre personne ou par soi-même (appelée communément « selfie » pour « autoportrait photographique » ou « égoportrait ») est intéressante, d'une part, du fait qu'elle est prise à l'aide du terminal du piéton ou conducteur, c'est-à-dire avec le terminal servant à la mise en oeuvre du procédé, et, d'autre part, car elle permet au partenaire de voyage d'avoir la certitude que la personne avec laquelle il va voyager est bien celle visible sur la photo.

De plus, elle permet une reconnaissance mutuelle rapide et donc une montée rapide dans le véhicule, ce qui évite de trop perturber le trafic.

Selon un mode de réalisation préféré de l'invention, les demandes d'acceptation/refus des prise en charge sont valables pendant une durée déterminée ; si à l'expiration de cette durée, le piéton (Pi) ou le conducteur du véhicule (Vj) n'a pas répondu, il est considéré que sa réponse est négative et il y a retour à l'étape de recherche par le serveur de compatibilités et de formation de couples de compatibilité [piéton (Pi) ; véhicule (Vj)].

On peut en outre prévoir que la durée déterminée susmentionnée donnée au conducteur soit plus longue que celle accordée au piéton. En effet, si le conducteur est en train de conduire son véhicule, il est souhaitable qu'il ne consulte son terminal pour prendre sa décision qu'à un moment qui s'y prête sans danger, par exemple, lorsque le véhicule est à l'arrêt devant un feu de circulation rouge.

L'invention a trait également à un système de facilitation des déplacements d'un ensemble Ep de piétons P au moyen d'un ensemble Ev de véhicules V, comportant :
- au moins un terminal TP destiné à un piéton P et comportant un dispositif de détermination de sa position courante GLP,
- au moins un terminal TV destiné ou associé à un véhicule V et comportant un dispositif de détermination de sa position courante GLV, et
- un serveur S,
et dans lequel :
- le ou les terminal/aux TP et le ou les terminal/aux TV sont aptes et configurés pour communiquer sans fil avec le serveur S ;
- le serveur S est apte et configuré pour communiquer sans fil avec les terminaux TP, TV ;
- les différentes configurations étant aptes à mettre en oeuvre le procédé selon l'invention.

Selon un autre aspect, l'invention se rapporte à un procédé de détermination de la compatibilité de l'itinéraire IP d'un piéton P muni d'un terminal portable TP avec l'itinéraire IV d'un véhicule V muni d'un terminal TV, en vue d'une prise en charge par celui-ci du piéton P, comprenant les étapes suivantes :
- saisie ou dictée par le piéton P de sa destination DP à son terminal TP ou lecture par ce terminal d'un code correspondant à la destination DP ;
- détermination par le terminal TP de sa position courante GLP ;
- envoi par le terminal TP de la destination DP ainsi que de la position courante GLP à un serveur S ;
- saisie ou dictée par le conducteur du véhicule V au terminal TV de la destination DV du véhicule V ou lecture par ce terminal d'un code correspondant à la destination DV;
- détermination par le terminal TV de sa position courante GLV;
- envoi par le terminal TV de la destination DV ainsi que de la position courante GLV au serveur S ;
- réception par le serveur S des positions courantes GLP, GLV et des destinations DP et DV du piéton P et du véhicule V ;
- calcul par le serveur S, pour chacun des points de l'itinéraire IV du véhicule V, de la distance d0 entre le point considéré et le piéton P et comparaison de cette distance d0 avec une distance maximale prédéterminée dmax ;
- si pour tous les points, la distance d0 est supérieure à dmax, il y a incompatibilité des itinéraires IP et IV ; envoi éventuel par le serveur S au terminal TP et/ou au terminal TV d'un signal d'absence de compatibilité ;
- si, pour au moins un point, la distance d0 est inférieure ou égale à dmax :
   - calcul par le serveur S de la distance d1 entre la destination DP et la destination DV et comparaison de cette distance d1 avec dmax ;
   - si d1 est inférieure ou égale à dmax, il y a compatibilité (de type 1) des itinéraires IP et IV;
   - si d1 est supérieure à dmax,
      ▪ calcul par le serveur S, pour chacun des points de l'itinéraire IV, de la distance d2 entre le point considéré et la destination DP et comparaison de d2 avec dmax ;
      ▪ si, pour tous les points, d2 est supérieure à dmax, il y a incompatibilité des itinéraires IP et IV ;
      ▪ si, pour au moins un point, d2 est inférieure ou égale à dmax, il y a compatibilité (de type 2) des itinéraires IP et IV, ce point est mémorisé en tant que PTmin.

L'itinéraire du véhicule V entre sa position courante GLV et sa destination DV peut être calculé par le serveur S. On peut prévoir que le serveur S calcule plusieurs itinéraires, par exemple le plus court en distance mais pas forcément en temps et le plus rapide mais pas forcément le plus court, et demande au conducteur du véhicule V de choisir celui qu'il préfère. On peut aussi envisager que le conducteur communique au serveur S les points (rues, intersections, bâtiments, etc.) par lequel il souhaite passer.

Il est en outre préférable qu'un au moins des véhicules prenne en charge plusieurs piétons et forme un couple de compatibilité avec chacun d'entre eux.

Selon encore un autre aspect, l'invention a pour objet un procédé de gestion de la mise en relation d'un véhicule V avec un piéton P dont la destination DP :
- est identique à la destination DV du véhicule V ou se trouve éloignée au plus d'une distance maximale prédéterminée dmax de cette destination DV ; ou
- se trouve sur un point PTmin de l'itinéraire IV du véhicule V ou est éloignée au plus d'une distance maximale prédéterminée dmax d'un point PTmin de cet itinéraire,
le piéton P étant muni d'un terminal portable TP et le véhicule V étant muni d'un terminal TV, ces terminaux TP,TV comportant ou étant associés à des dispositifs de détermination de leurs positions courantes GLP,GLV, ce procédé comprenant les étapes suivantes :
- détermination par le terminal TP de sa position courante GLP et envoi de cette position au serveur S ;
- détermination par le terminal TV de la position courante GLV et envoi de cette position à un serveur S ;
- réception par le serveur S des positions courantes GLP et GLV ;
- calcul par le serveur S de la distance courante d3 entre le véhicule V et le piéton P,
- comparaison de la distance d3 à une distance maximale prédéterminée da ;
- si d3 est supérieure à da, retour aux étapes précédentes ;
- si d3 est inférieure ou égale à da,
   - envoi par le serveur S au terminal TV d'un signal d'arrêt du véhicule V ; de préférence, ce signal comporte des données personnelles fraîches relatives au piéton P ;
   - envoi par le serveur S au terminal TP d'un signal invitant le piéton à rejoindre le véhicule V et à monter dedans ; de préférence, ce signal comporte des données personnelles fraîches relatives au conducteur du véhicule V ainsi que préférentiellement des données relatives au véhicule lui-même, avantageusement, sa photo ;
- envoi par le terminal TP au serveur S d'un signal de montée dans un véhicule et/ou envoi par le terminal TV d'un signal de montée de piéton,
- envoi par le terminal TV de sa position courante au serveur S,
- dans le cas où la destination du véhicule DV est identique ou différente au maximum de dmax de la destination du piéton DP (compatibilité de type 1), comparaison par le serveur S de la position courante du véhicule V avec la destination DV, en cas de différence, retour à l'étape précédente d'envoi par le terminal TV au serveur S de sa position courante ; s'il y a identité, envoi éventuel par le serveur S au terminal TV et éventuellement au terminal TP d'un signal d'arrivée à destination ;
- dans le cas où la destination du piéton DP se trouve en un point PTmin de l'itinéraire IV du véhicule V ou éloigné de dmax au plus d'un point PTmin de cet itinéraire (compatibilité de type 2), comparaison par le serveur S de la position courante du véhicule V avec la position PTmin ; s'il y a égalité, envoi par le serveur S au terminal TV d'un signal d'arrêt pour descente piéton et éventuellement au terminal TP d'un signal d'arrivée à destination ; sinon retour à l'étape précédente d'envoi par le terminal TV au serveur S de sa position courante;
- éventuellement, envoi par le terminal TP au serveur S d'un signal de fin de transport et/ou envoi par le terminal TV au serveur S d'un signal de fin de transport.

Il va de soi que durant toute cette gestion de la mise en relation, le conducteur du véhicule doit suivre l'itinéraire calculé par le serveur S et qu'il a le cas échéant choisi parmi d'autres itinéraires proposés.

Il est donc préférable qu'après le calcul de l'itinéraire par le serveur S et éventuellement son choix par le conducteur, le serveur S envoie cet itinéraire au terminal TV pour que celui-ci puisse l'afficher en permanence, sauf peut-être lorsqu'il y a affichage des données personnelles fraîches du piéton sur l'écran du terminal. Bien entendu, cet itinéraire peut aussi être communiqué oralement par le serveur S *via* le terminal TV. Le serveur S peut gérer le déplacement du véhicule V jusqu'à sa destination DV de la même manière que le font les systèmes de guidage par GPS du commerce.

La distance d'arrêt da peut être la distance maximale prédéterminée dmax, surtout lorsque le système est destiné à être utilisé en zone sensiblement urbaine.

Selon une variante destinée plutôt aux zones non urbaines où les véhicules circulent plus vite, la distance d'arrêt da est celle qui est calculée de manière générale et approximative pour un véhicule automobile et qui est égale au carré du chiffre des dizaines de la vitesse du véhicule exprimée en km/h. Ainsi, pour un véhicule Vj se déplaçant à une vitesse VITj, da est égal à (VITj/10) x (VITj/10), soit pour une voiture se déplaçant à 90 km/h, da est *grosso modo* de 81 m. Comme il s'agit d'une vitesse approximative est en principe élevé car il s'agit normalement d'un arrêt plutôt brusque, il est probable que le véhicule nécessite une distance supérieur pour s'arrêter. Comme da est mesurée depuis la position du piéton, cela veut dire que le véhicule va dépasser le piéton. Néanmoins, à moins que le piéton n'ait choisi une valeur pour dmax très inférieure à la valeur par défaut de 50 m (comme on le verra par la suite), le véhicule s'arrêtera quand même à une distance du piéton qui sera inférieure à dmax. La condition de base, à savoir, que le piéton n'ait pas à parcourir à pied une distance supérieure à dmax pour rejoindre le véhicule, restera donc remplie.

Grâce au procédé de gestion de la mise en relation, la tâche du conducteur n'est pas compliquée par la présence d'un passager. Il n'a en effet pas besoin de mémoriser l'adresse où il doit prendre en charge le piéton ni l'adresse où il doit le déposer. Il peut donc rester concentré sur sa conduite, ce qui est particulièrement intéressant lorsque le conducteur est distrait, a du mal à mémoriser des adresses ou ne connaît pas bien les lieux.

Par ailleurs, l'utilisation de données personnelles fraîches, telles qu'un « selfie », est particulièrement avantageuse car elle facilite grandement la reconnaissance mutuelle lors de la rencontre des futurs partenaires de voyage ou « covoitureurs ». En effet, si on utilisait une photo non récente, certains traits de la personne pourraient avoir changé depuis, notamment, la coupe et/ou la couleur des cheveux, la présence/absence d'une barbe, le bronzage, le maquillage, le port d'un foulard, d'un décolleté, d'un tatouage, etc.

Les données personnelles fraîches sont donc des données qui datent du moment de la demande de la formation de la demande de prise en charge par un piéton et du moment de la demande de la formation de l'offre de prise en charge par un conducteur. Ces données ne varient donc normalement pas entre le moment de la demande en/offre de prise en charge et la rencontre ou mise en relation réelle du piéton et du conducteur. C'est ce qui leur confère un rôle sécurisant ou rassurant.

Comme données personnelles fraîches, outre les photos ou les « selfies », on peut aussi citer les photos mouvantes qui sont en fait des images généralement sous le format «.gif » et que l'on appellera désormais « gifies », ainsi que des vidéos, de préférence de courte durée, les vidéos ayant l'avantage de comporter en principe du son.

Selon un mode de réalisation préféré, le procédé de gestion de la mise en relation comprend l'envoi par le terminal (TP) au serveur (S) d'un signal de fin de transport et l'envoi par le terminal (TV) au serveur (S) d'un signal de fin de transport et ces envois sont accompagnés d'une évaluation ECj du conducteur du véhicule (Vj) par le piéton (Pi) et d'une évaluation EPi du piéton (Pi) par le conducteur du véhicule (Vj).

Selon un mode de réalisation avantageux, il est en outre prévu :
- le calcul par le serveur (S) d'une moyenne des évaluations du conducteur du véhicule (Vj) pour obtenir une évaluation moyenne globale EMCj du conducteur, l'incrémentation de 1 du nombre de transports qu'il a effectués et le stockage de ces informations ; et
- le calcul par le serveur (S) d'une moyenne des évaluations du piéton (Pi) pour obtenir une évaluation moyenne globale EMPi du conducteur, l'incrémentation de 1 du nombre de transports dont il a bénéficié et le stockage de ces informations.

Selon un autre mode de réalisation avantageux, pour chaque couple de compatibilité [piéton (Pi) ; véhicule (Vj)] :
- chaque signal de possibilité de prise en charge envoyé à un piéton (Pi) comprend l'évaluation moyenne globale EMCj du conducteur du véhicule (Vj) et de préférence également le nombre de transports déjà effectués et sur la base desquels cette évaluation moyenne globale EMCj a été calculée ;
- chaque signal de possibilité de prise en charge envoyé au conducteur véhicule (Vj) comprend l'évaluation moyenne globale EMPi du piéton (Pi) et de préférence également le nombre de transports dont le piéton (Pi) a bénéficié et sur la base desquels cette évaluation moyenne globale EMPi a été calculée.

L'utilisation des évaluations est également très intéressante car les prises de décision d'un être humain comportant généralement une part de rationnel et d'irrationnel, la prise en compte de ses deux aspects permet un meilleur choix pour l'utilisateur. Ainsi, l'aspect rationnel est ici la moyenne mathématique des évaluations précédentes et l'aspect irrationnel peut correspondre ici à l'envie ou non de voyager une personne ayant un certain faciès ou une certaine tenue.

Cette combinaison de rationnel et d'irrationnel, voire d'intuitif, donne ainsi à l'utilisateur l'impression de prendre la bonne décision quant à son partenaire de trajet.

On peut même affiner davantage la prise de décision en la distinguant entre les sexes des personnes. Concrètement :
- pour chaque véhicule (Vj), chaque évaluation ECj et chaque signal de fin de transport reçus par le serveur (S) sont stockés par celui-ci en relation avec le sexe du piéton (Pi) qui vient d'être transporté et le serveur (S) calcule une moyenne des évaluations attribuées pour les transports de femmes EMCFj et/ou une moyenne des évaluations reçues pour les transports d'hommes EMCHj ;
- pour chaque piéton (Pi), chaque évaluation EPi et chaque signal de fin de transport reçus par le serveur (S) sont stockés par celui-ci en relation avec le sexe du conducteur du véhicule (Vj) qui vient de la transporter et le serveur (S) calcule une moyenne des évaluations reçues pour les voyages effectués avec des conductrices EMPFi et/ou une moyenne des évaluations reçues pour les voyages effectués avec des conducteurs EMPHi ;
et dans lequel
- chaque signal de possibilité de prise en charge envoyé à un piéton (Pi) comprend
   o la moyenne des évaluations reçues par le conducteur du véhicule (Vj) pour les transports de femmes EMCFj et de préférence également le nombre de transports de femmes effectués et/ou
   o la moyenne des évaluations reçues pour les transports d'hommes EMCHj et de préférence également le nombre de transports d'hommes effectués;
   o ainsi qu'éventuellement l'évaluation moyenne globale EMCj du conducteur du véhicule (Vj) et éventuellement le nombre total de transports déjà effectués;
- chaque signal de possibilité de prise en charge envoyé un véhicule (Vj) ou à son conducteur comprend
   o la moyenne des évaluations reçues par le piéton (Pi) pour les voyages effectués avec des conductrices EMPFi et de préférence également le nombre voyage effectués avec des femmes et/ou
   ∘ la moyenne des évaluations reçues pour les voyages effectués avec des conducteurs EMPHi et de préférence également le nombre de voyages effectués avec des hommes;
   o ainsi qu'éventuellement son évaluation moyenne globale EMPi du piéton (Pi) et éventuellement le nombre total de transports dont le piéton (Pi) a bénéficié.

Le fait de distinguer entre les évaluations fournies par les femmes et celles fournies par les hommes permet d'affiner la sélection du partenaire de voyage en tenant compte, notamment, du fait que certains hommes n'ont pas le même comportement suivant qu'ils sont en présence d'un homme ou d'une femme.

Au début, lorsqu'un piéton (P) ou un conducteur d'un véhicule (V) s'inscrit, si le système prévoit d'envoyer son ou ses évaluations à son partenaire potentiel de voyage, il est attribué par défaut une note moyenne à ce piéton (P) ou conducteur. Par exemple, si les évaluations possibles sont les suivantes :
0 : exécrable, à éviter
1 : franchement mauvais
2 : plutôt mauvais
3 : moyen
4 : bon
5 : excellent,
on attribue par défaut la valeur de 3 au piéton ou conducteur qui s'inscrit et va donc utiliser la système pour la première fois. De toute façon, si le nombre de transports est indiqué, le partenaire de voyage comprendra bien que c'est une valeur qui est basé sur l'hypothèse que la personne a un comportement correct, ce qui est normalement le cas pour la plupart des personnes.

Bien entendu, on peut prévoir que le conducteur indique si et combien de personnes voyagent avec lui. Dans ce cas, le système peut lui demander de prendre une photo de ces personnes pour les afficher simultanément ou séquentiellement sur le terminal du piéton afin que celui puisse donner ou non son accord pour voyager avec le conducteur et tous ses accompagnants.

Il va de soi que s'il s'agit de personnes ayant été prises en charge par mise en oeuvre précédente du procédé selon l'invention sur le même trajet du véhicule, il peut être prévu d'afficher outre les photos de ces personnes, leurs évaluations comme indiqué ci-dessus.

Le procédé peut aussi comporter une étape d'archivage des données relatives à chaque transport.

Si on part du principe que le piéton ne bouge pas, on peut prévoir que son terminal TP n'envoie qu'une seule fois sa position courante et que l'étape de
- détermination par le terminal (TP) de la position courante du piéton (P) et envoi de cette position au serveur (S) ;
n'ait lieu qu'une seule fois.

Ainsi, pour la deuxième étape et les suivantes étapes de
- calcul par le serveur (S) de la distance courante (d3) entre le véhicule (V) et le passager (P),
on utilise la position précédente qui est normalement la position initiale du piéton P.

Ceci évite au terminal TP d'envoyer continuellement sa position courante et évite au serveur S de rechercher cette position courante dans la base des passagers. Le serveur exécute alors moins d'opérations et gagne un peu de temps.

L'invention offre donc à un piéton la possibilité d'être emmené en véhicule à sa destination et ce, de manière très simple et rapide.

De même, tout conducteur peut à tout instant proposer un siège libre à un passager, voire plusieurs sièges libres à autant de passagers.

L'invention est donc en quelque sorte un nouveau type de covoiturage revêtant une forme moderne d'autostop et conserve sa simplicité. En effet, elle permet la gestion des déplacements des piétons (P) et des véhicules (V), de manière à ce que les piétons (P) et les conducteurs des véhicules (V), en tant qu'êtres humains, exécutent eux-mêmes, physiquement, les étapes suivantes uniquement :
- une étape préalable unique, pour chaque piéton (P) et pour chaque véhicule (V), d'inscription respectivement dans une base de piétons inscrits et une base de conducteurs inscrits puis
- pour chaque piéton (P), au moins une, de préférence plus d'une, idéalement une multitude de répétitions de l'ensemble des étapes suivantes uniquement, par trajet :
   - lancement d'un programme apte à mettre en oeuvre le procédé selon l'invention ;
   - éventuellement, identification personnelle ;
   - communication de sa destination (DP) ;
   - communication de données personnels fraîches, comme un autoportrait photographique ;
   - éventuellement, refus d'une ou plusieurs propositions de prise en charge ;
   - acceptation d'une prise en charge ;
   - confirmation de la montée dans un véhicule (V) ;
   - communication de la fin du transport ;
   - éventuellement, évaluation du conducteur du véhicule (V) ;
- pour chaque conducteur de véhicule (V), au moins une, de préférence plus d'une, idéalement une multitude de répétitions de l'ensemble des étapes suivantes uniquement, par trajet :
   - lancement d'un programme apte à mettre en oeuvre le procédé selon l'invention ;
   - éventuellement, identification personnelle ;
   - communication de sa destination (DV) ;
   - communication de données personnels fraîches, comme un autoportrait photographique ;
   - éventuellement, refus d'une ou plusieurs propositions de prise en charge ;
   - acceptation d'une prise en charge ;
   - confirmation de la montée d'un piéton (P) dans le véhicule (V) ;
   - éventuellement, communication de la fin du transport ; et
   - éventuellement, évaluation du piéton (P).

Le reste des opérations est réalisé par le serveur (S), le terminal TP et le terminal TV, de sorte que l'essentiel du fonctionnement du système est invisible pour l'utilisateur et surtout, ce dernier n'a pas à s'en occuper.

D'autres caractéristiques et avantages de l'invention vont maintenant être décrits en détail dans l'exposé suivant qui est donné en référence aux figures annexées, lesquelles représentent schématiquement :
- figure 1 : un système, selon l'invention, de facilitation des déplacements d'un ensemble de piétons au moyen d'un ensemble de véhicules ;
- figures 2 et 3 : des schémas illustrant, respectivement, la possibilité et l'impossibilité d'une prise en charge dans un premier cas ;
- figures 4 et 5 : des schémas illustrant, respectivement, la possibilité et l'impossibilité d'une prise en charge dans un deuxième cas ;
- figure 6 et 7 : des schémas illustrant, respectivement, la possibilité et l'impossibilité d'une prise en charge dans un troisième cas ;
- figures 8 et 8bis: un exemple d'ordinogramme de programme comportant les étapes essentielles du principe de détermination de la compatibilité des destinations et itinéraires ;
- figures 9 et 9bis : un exemple d'ordinogramme de programme comportant les étapes essentielles du principe de mise en relation d'un piéton avec un véhicule ;
- figure 10 : un exemple d'ordinogramme de programme déclinant les étapes du fonctionnement d'un site Web permettant notamment l'inscription préalable de piétons ou de conducteurs, afin qu'ils puissent utiliser l'invention ;
- figures 11 et 11bis : un exemple d'ordinogramme d'un programme destiné à gérer le fonctionnement du terminal d'un piéton dans le but de mettre en oeuvre l'invention ;
- figures 12 et 12bis : un exemple d'ordinogramme d'un programme destiné à gérer le fonctionnement du terminal d'un véhicule ou d'un conducteur dans le but de mettre en oeuvre l'invention ;
- figures 13 à 13quinter : des parties d'un exemple d'ordinogramme de programme comportant les étapes essentielles du procédé selon l'invention de facilitation des déplacements de piétons grâce à des véhicules.

### Exposé détaillé de l'invention

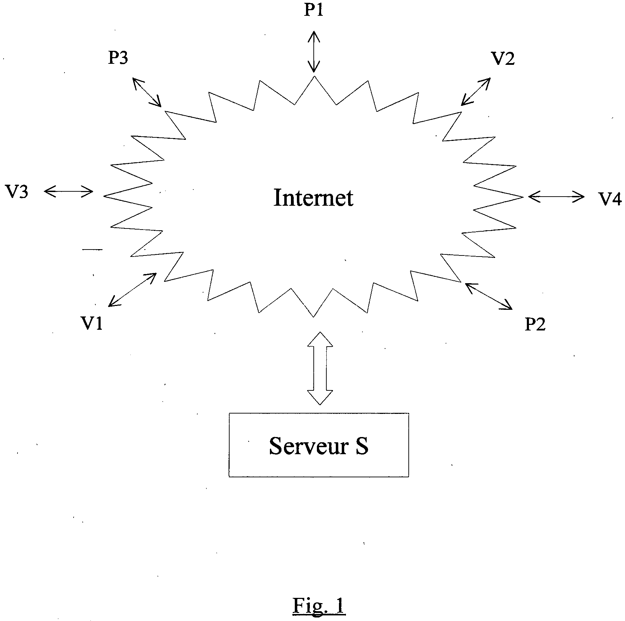

Le système de facilitation des déplacements d'un ensemble de piétons au moyen d'un ensemble de véhicules selon l'invention est illustré sur la figure 1, sur laquelle on peut voir un serveur S communiquant à travers le réseau Internet avec des véhicules V1, V2, V3 et V4 et des piétons P1, P2 et P3.

### Principes de base

Trois éléments au minimum sont nécessaires pour que l'invention puisse être mise en oeuvre. Il s'agit d'un piéton P souhaitant devenir un passager, d'un véhicule V désirant transporter un passager et d'un serveur S pour les mettre en relation.

Chaque piéton P doit être muni d'un terminal TP qui est de préférence muni d'un dispositif de détermination de sa position courante GLP et apte à communiquer avec le serveur S pour lui transmettre des informations. En variante, on peut envisager que le piéton P utilise un terminal dépourvu dudit dispositif. Dans ce cas, le piéton P devra saisir son adresse et celle-ci pourra être transformée en position courante par le terminal TP et envoyée au serveur S, à moins que celui-ci se charge de transformer l'adresse en position courante.

De même, chaque véhicule V doit être muni d'un terminal TV muni d'un dispositif de détermination de sa position courante et apte à communiquer des informations au serveur S. Le terminal TV peut faire partie de l'électronique embarquée du véhicule ou il peut s'agir du terminal TV du conducteur du véhicule V.

Les terminaux TP et TV peuvent des ordiphones tels que ceux commercialisés sous les appellations SmartPhone®, iPhone®, etc., des tablettes telles qu'un iPad®, une tablette Android®, etc. Ces appareils possèdent un microprocesseur performant leur permettant d'exécuter des programmes complexes contenus dans leur mémoire à forte capacité et divers modules de communication par ondes électromagnétiques (radio, radiotéléphone, téléphone portable, réseau 3G ou 4G de transmission des données, etc.) éventuellement par l'intermédiaire d'un réseau tel que le réseau Internet. De plus, ils ont l'avantage d'être généralement équipés d'un système de géolocalisation du type GPS.

Quant au serveur S, il peut s'agir d'un ordinateur disposant d'au moins une mémoire à forte capacité et d'au moins un microprocesseur performant lui permettant d'exécuter des programmes complexes. Il comprend ou est connecté à un module de communication apte à communiquer avec les terminaux TP et TV par ondes électromagnétiques (radio, radiotéléphone, téléphone portable, réseau 3G ou 4G de transmission des données, etc.) éventuellement par l'intermédiaire d'un réseau tel que le réseau Internet. De préférence, le système employé est celui permettant la plus grande rapidité de transmission des données.

### Détermination de la possibilité de la prise en charge d'un piéton P par un véhicule V

Cette possibilité de prise en charge peut en fait également être appelée « compatibilité des itinéraires du piéton P et du véhicule V ».

Pour qu'un véhicule V puisse prendre en charge un piéton P futur passager, encore faut-il qu'il puisse d'abord rencontrer physiquement ce piéton P, et ce, normalement sans modifier son itinéraire.

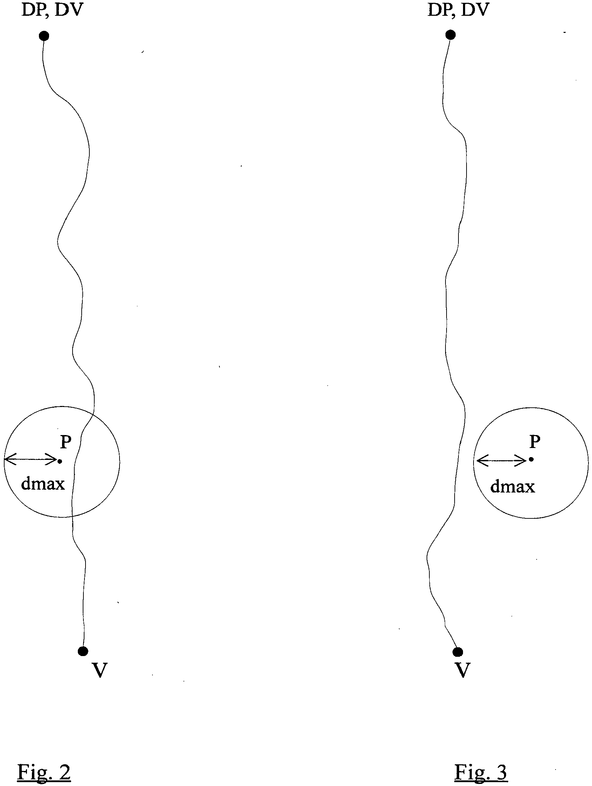

Plusieurs cas peuvent alors être envisagés. Ils sont schématisés sur les figures 2 à 7 où sont représentés un piéton P souhaitant se rendre à sa destination DP et un véhicule V souhaitant se rendre à sa destination DV.

Le piéton P est supposé immobile pour simplifier la démonstration. Il n'est disposé à parcourir à pied qu'une distance limitée pour rejoindre un véhicule V ou pour atteindre sa destination DP. Cette distance est une distance maximale prédéterminée appelée dmax. Le système propose une distance par défaut qui est par exemple de 50 mètres, mais cette distance dépend de chaque piéton P et elle peut être modifiée. On peut en effet concevoir qu'une personne âgée à mobilité réduite ne souhaite pas parcourir à pied plus de 10 mètres tandis qu'un étudiant peut être prêt à marcher 100 mètres pour atteindre un véhicule. On peut donc associer à chaque piéton P sa propre distance maximale prédéterminée dmax.

Sur la figure 2, on voit que l'itinéraire du véhicule V passe à proximité du piéton P, c'est-à-dire à une distance inférieure ou égale à la distance dmax. Le véhicule V va donc pouvoir s'arrêter, lorsqu'il sera suffisamment près du piéton P, pour pouvoir le prendre en charge.

Sur la figure 3, le piéton P est trop éloigné de l'itinéraire du véhicule V. Celui-ci sera toujours à une distance supérieure à dmax par rapport au piéton P. Il ne pourra donc pas le prendre en charge.

Cependant, même si le véhicule V passe suffisamment près du piéton P pour pouvoir le prendre à son bord, cela ne veut pas forcément dire qu'il pourra l'emmener à sa destination.

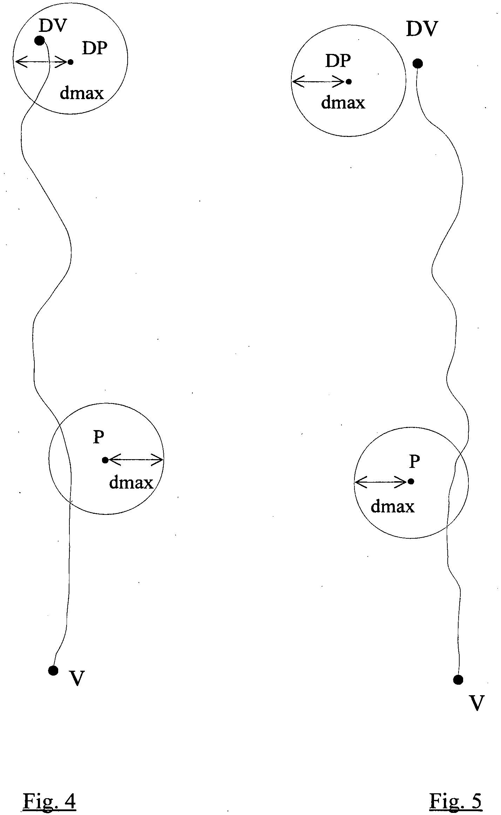

Ainsi, dans le cas de la figure 4, les destinations DP et DV du piéton P et du véhicule V sont éloignées d'une distance inférieure à dmax. Le véhicule V peut donc transporter le piéton P. Une fois le véhicule V arrivé à sa destination DV, le passager ex-piéton P doit redevenir piéton et marcher un peu, sur une distance inférieure à dmax, pour arriver à sa destination DP. Le cas où des destinations DV et DP sont identiques ou éloignées d'une distance inférieure ou égale à dmax est défini comme étant le type de compatibilité 1.

Dans le cas de la figure 5, la destination du piéton P est différente de celle du véhicule V et elle en est éloignée d'une distance supérieure à dmax. Dans ce cas, le piéton P ne peut pas être pris en charge par le véhicule V, sinon il devrait marcher sur une distance plus longue que ce qu'il est prêt à accepter.

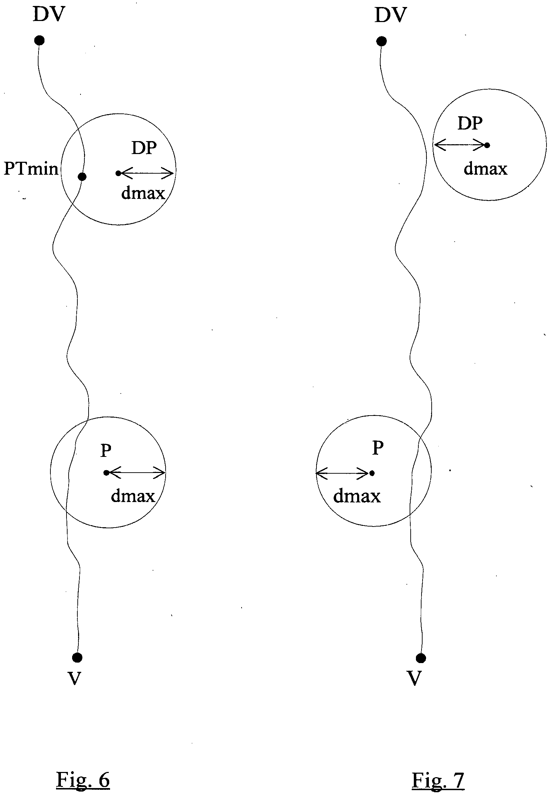

Sur les figures 6 et 7 sont schématisés deux autres cas. Dans le cas de la figure 6, la destination DP du piéton P est éloignée de celle DV du véhicule V, mais elle se situe à une distance inférieure à dmax d'un point PTmin de l'itinéraire IV du véhicule V. Cela veut dire que le véhicule V pourra déposer le piéton P à proximité de sa destination DP, il devra juste s'arrêter en cours de route. Le point PTmin sera alors mémorisé par le serveur S. Ensuite, une fois que le véhicule sera au point PTmin, il devra s'arrêter pour que le piéton P puisse descendre et rejoindre sa destination DP en marchant sur une distance inférieure à dmax. Le cas où la destination DP du piéton se situe sur l'itinéraire IV du véhicule V ou à un point PTmin éloigné d'une distance inférieure ou égale à dmax de cet itinéraire est défini comme étant le type de compatibilité 2.

En revanche, dans le cas de la figure 7, aucun point de l'itinéraire du véhicule ne passe suffisamment près de la destination DP du piéton. Cela veut dire que bien que la position initiale du piéton P se trouve assez proche de l'itinéraire du véhicule V pour que celui-ci puisse le faire monter, la destination DP est trop éloignée de cet itinéraire pour que le piéton puisse en être rapproché suffisamment par le véhicule V.

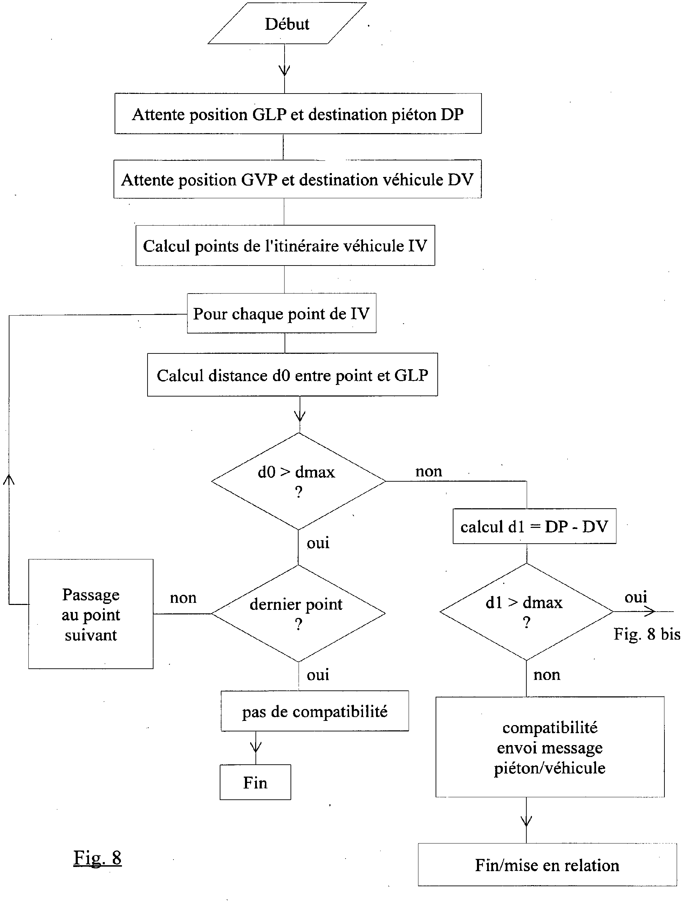

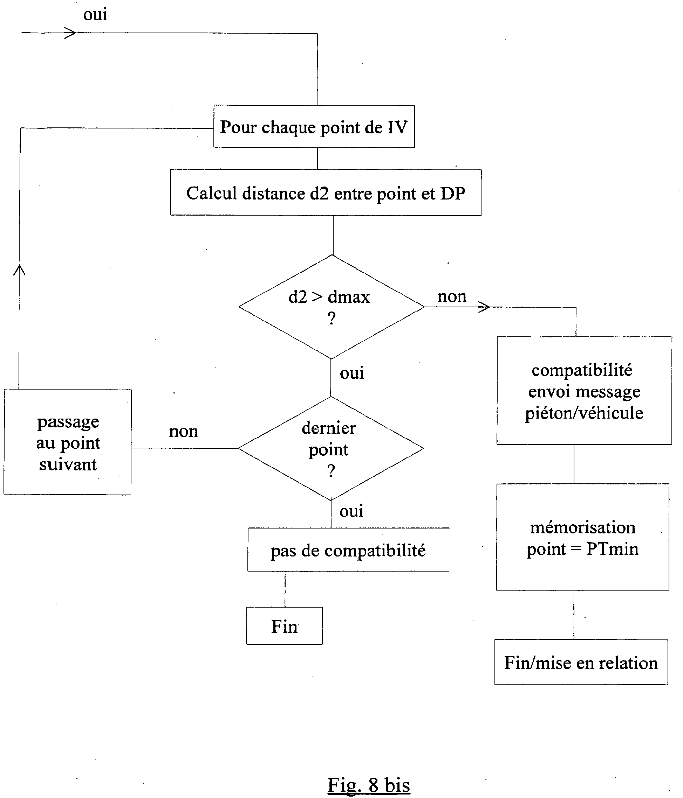

Un exemple d'ordinogramme détaillant S les étapes pour le serveur S du principe de détermination de la compatibilité des itinéraires est représenté sur les figures 8 et 8bis.

### Mise en relation du piéton P avec le véhicule V

S'il s'avère, d'une part, que le piéton P peut être pris en charge par le véhicule V et, d'autre part, que celui-ci peut l'emmener à sa destination DP ou le déposer tout près de celle-ci, le système peut alors envoyer un signal de possibilité de prise en charge à la fois au piéton P, afin de l'informer qu'il peut et va être emmené à sa destination DP ou à proximité de celle-ci et il envoie aussi un signal de possibilité de prise en charge au véhicule P, afin qu'il sache qu'il va devoir s'arrêter pour laisser monter un piéton P.

De préférence, le signal précise s'il le véhicule V doit emmener le piéton P à sa destination DV (compatibilité de type 1) ou s'il doit le déposer à un endroit intermédiaire PTmin situé sur son itinéraire IV (compatibilité de type 2).

La mise en relation du piéton P avec le véhicule V s'effectue de préférence de la manière suivante :
- le serveur S calcule la distance courante d3 entre le véhicule V et le piéton P,
- puis il compare cette distance d3 à dmax ;
- si d3 est supérieure à dmax, cela signifie que le véhicule V est encore trop loin du piéton P pour pouvoir le prendre en charge ; le serveur S doit donc retourner à l'étape précédente de détermination de d3 ;
- et ainsi de suite jusqu'à ce que d3 soit inférieure ou égale à dmax, dans ce cas :
   - le serveur S envoie au terminal TV un signal d'arrêt pour informer le conducteur qu'il doit arrêter le véhicule V ;
   - en même temps, ou juste avant, ou juste après, le serveur S envoie au terminal TP un signal de prise en charge afin d'inviter le piéton P à monter dans le véhicule V après avoir éventuellement marché si nécessaire sur une distance inférieure ou égale à dmax ;
- le piéton P actionne ensuite le clavier et/ou l'écran de son terminal TP et/ou informe vocalement celui-ci, afin qu'il envoie un signal de montée dans le véhicule au serveur S pour l'informer que la prise en charge a bien eu lieu,
- et/ou le conducteur du véhicule V actionne le clavier et/ou l'écran du terminal TV et/ou informe vocalement celui-ci, afin qu'il envoie un signal de montée du piéton au serveur S pour l'informer que la prise en charge a bien eu lieu,
- puis le terminal TV envoie régulièrement sa position courante GLV au serveur S ;
- en cas de compatibilité de type 1, le serveur S compare la position courante du véhicule V à la destination DV, si la différence est inférieure ou égale à dmax, le serveur envoie un signal d'arrêt au véhicule V pour que celui-ci s'arrête et laisse descendre le passager ex-piéton P et le conducteur descend aussi en principe de son véhicule ; le passager P actionne alors son terminal TP afin que celui-ci envoie un signal de fin de transport au serveur S et/ou le conducteur actionne le terminal TV pour que celui-ci envoie un signal de fin de transport au serveur S ;
- en cas de compatibilité de type 2, le serveur S compare la position courante du véhicule V au point PTmin ; s'il y a une différence, il attend alors une nouvelle position courante du terminal TV ; s'il y a identité entre la position courante et le point PTmin, le serveur S envoie un signal d'arrêt au terminal TV pour que le conducteur sache qu'il doit arrêter son véhicule V pour laisser descendre le passager P ; en variante, on peut prévoir que le serveur S mesure la distance entre la position courante du véhicule et PTmin et dès que celle-ci est inférieure à un certain seuil, il envoie déjà le signal d'arrêt, ceci est préférable si l'on considère que le véhicule V peut rouler vite et qu'il lui faut une certaine distance pour s'arrêter ;
- après sa descente du véhicule V, le passager P peut actionner le clavier et/ou l'écran de son terminal TP et/ou informer vocalement celui-ci, pour qu'il envoie au serveur S un signal de fin de transport ;
- et/ou une fois le piéton descendu, le conducteur P peut actionner le clavier et/ou l'écran de son terminal TP et/ou informer vocalement celui-ci, pour qu'il envoie au serveur S un signal de fin de transport.

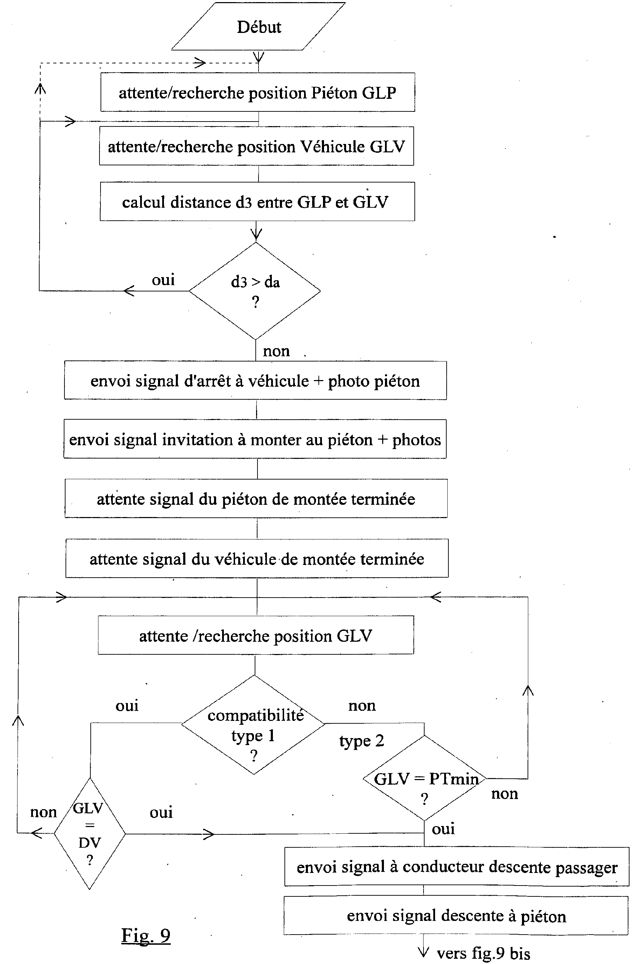

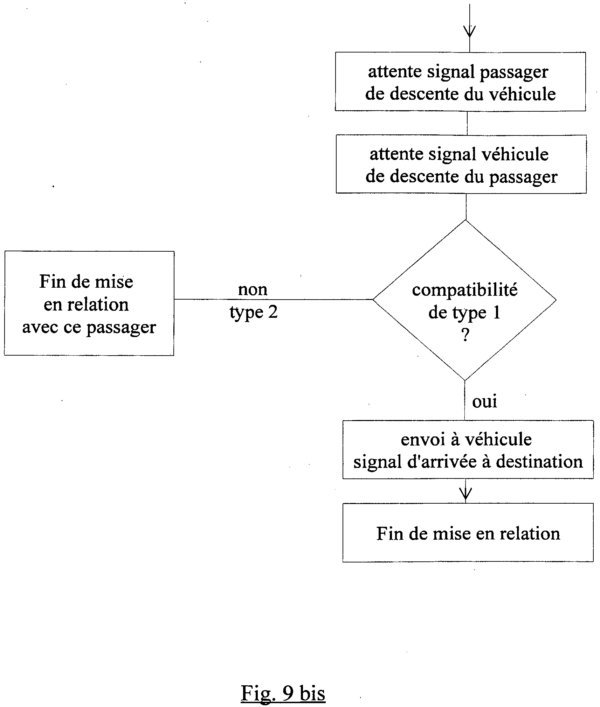

Un exemple d'ordinogramme détaillant pour le serveur S les étapes du principe de mise en relation qui vient d'être expliqué est représenté sur les figures 9 et 9bis.

### Exemple de réalisation

Le serveur comprend ou a accès à une ou plusieurs mémoire pouvant contenir notamment :
- une base d'utilisateurs piétons inscrits, avec des données personnelles des piétons, ces données pouvant comprendre, l'identité (nom, prénom...), le sexe, la distance maximale prédéterminée dmax souhaitée, le refus de voyager en compagnie d'un fumeur ou d'un animal (chien, chat, furet, etc.) ; éventuellement des données relatives au paiement par exemple, le numéro de carte bancaire ou un identifiant de compte Skype® ;
- une base d'utilisateurs conducteurs inscrits avec
   o des données relatives à ces conducteurs, ces données pouvant comprendre des données personnelles des conducteurs, comme l'identité (nom, prénom...), le sexe, le fait d'être un fumeur, la présence habituelle d'un animal (chien, etc.) ;
   o des données relatives au véhicule, telles qu'une ou plusieurs photos (par exemple, de face, de dos, de côté, en perspective, etc.), le type de véhicule, son modèle, sa couleur, sa plaque minéralogique, le nombre de personnes que le conducteur est disposé à prendre en charge simultanément ;
   o des données relatives à la réception des participations aux frais, par exemple, les coordonnées bancaires ou un identifiant de compte Skype®, et la somme des distances de transport parcourues ;
- une base de piétons demandeurs de prise en charge, avec leurs positions initiales et leurs destinations et des données personnelles fraîches relatives à ces piétons, comme leur « selfie » ;
- une base de conducteurs offreurs de prise en charge, avec leurs positions initiales et leurs destinations et des données personnelles fraîches relatives à ces conducteurs, comme leur « selfie » ;
- une base des couples de compatibilité ;
- une base des passagers, c'est-à-dire des piétons qui viennent d'être associés à un véhicule et vont être pris en charge ou le sont déjà ; cette base contient des informations relatives aux positions courantes GLP, aux signaux émis par les terminaux TP ;
- une base des transporteurs, c'est-à-dire des véhicules qui ont déjà été associés à un ou plusieurs piétons et qui vont les prendre en charge ou les ont déjà pris en charge ; cette base contient des informations relatives aux positions courantes GLV, aux signaux émis par les terminaux TV ;
- éventuellement une mémoire géographique prévue pour le calcul des itinéraires et/ou contenant les coordonnées de localisation de certaines destinations.

L'unité centrale de traitement ou le microprocesseur du serveur peut effectuer régulièrement des mises à jour notamment de la base des passagers et de la base des conducteurs ou laisser cette tâche à un coprocesseur.

Le serveur S est de préférence apte à recevoir au moins les signaux suivants :
- signal de demande de prise en charge provenant d'un terminal de piéton TP ;
- signal d'offre de prise en charge provenant d'un terminal TV de véhicule ou de conducteur de véhicule ;
- signal de montée dans un véhicule provenant d'un terminal TP de piéton;
- signal de fin de transport provenant d'un terminal TP de piéton ;
- éventuellement signal de montée d'un piéton provenant d'un terminal TV de véhicule ;
- éventuellement signal de montée d'un piéton provenant d'un terminal TV de véhicule ;
- éventuellement signal de fin de transport provenant d'un terminal TV de véhicule ;
- éventuellement signal de fin de transport provenant d'un terminal TP de piéton.

Ces signaux ont en principe une forme codée permettant au serveur de les distinguer entre eux et de les stocker dans les bases auxquelles ils correspondent.

Le serveur S est de préférence apte à émettre au moins les signaux suivants :
- signal de possibilité de prise en charge destiné à un terminal TP de piéton comprenant des données personnelles fraîches relatives à un conducteur ;
- signal de possibilité de prise en charge destiné à un terminal TV de véhicule, comprenant des données personnelles fraîches relatives à un piéton et éventuellement une indication du type de compatibilité 1 ou 2 ;
- signal, destiné à un piéton (ou un conducteur) de refus de prise en charge par un conducteur (ou respectivement un piéton) ;
- signal d'invitation, destiné à un terminal TP de piéton, pour inviter celui-ci à monter dans un véhicule ;
- signal d'arrêt de montée piéton, destiné à un terminal TV de véhicule, pour que le conducteur arrête le véhicule afin de laisser monter un piéton ;
- signal d'arrêt de descente passager, destiné à un terminal TV de véhicule, pour que le conducteur arrête le véhicule afin de laisser descendre un piéton ;
- éventuellement signal d'arrivée à destination destiné à un terminal TV de véhicule pour que le conducteur arrête son véhicule ;
- éventuellement signal d'arrivée à destination destiné à un terminal TP de piéton, pour que celui-ci descende du véhicule le transportant ;
- éventuellement, signal d'absence de compatibilité destiné à un véhicule ou à un piéton.

Ces signaux peuvent également être codés.

### Inscriptions préalables des piétons et des conducteurs

L'inscription des piétons et conducteurs peut se faire au moyen d'un ordinateur ou terminal relié à Internet et accédant à un site web relatif à l'invention.

Un fois sur le site, le piéton ou conducteur soit s'inscrire en choisissant soit une inscription en tant qu'utilisateur piéton soit en tant en qu'utilisateur conducteur.

Il choisit donc un identifiant et un mot de passe afin de créer un compte utilisateur piéton ou conducteur, puis saisit les informations précitées qui sont destinées à alimenter la base des piétons inscrits ou la base des conducteurs inscrits.

En variante, l'utilisateur piéton ou conducteur peut s'inscrire au moyen de son terminal TP ou TV, en ouvrant le navigateur Web de son terminal pour aller sur le site web de l'invention ou en ouvrant une application lisant un code QR renvoyant au site web de l'invention, pour ensuite télécharger une application prévue pour mettre en oeuvre le procédé selon l'invention en coopération avec le serveur S. Il peut aussi aller sur une plateforme de téléchargement d'applications telles les plateformes connues sous les appellations App store®, Google® Play Store, Windows Store®, etc.

Lors de la première ouverture de l'application, celle-ci invite l'utilisateur piéton ou conducteur à procéder à son inscription de manière similaire à ce qu'il pourrait faire sur le site web relatif à l'invention.

Lors de son inscription, l'utilisateur piéton peut choisir entre plusieurs formules d'utilisateur piéton, notamment un abonnement lui permettant d'utiliser le système selon l'invention pendant une durée déterminée, ou un achat d'unités de transport.

Le paiement peut s'effectuer au moyen d'un module de paiement par carte bancaire, ou au moyen d'un compte Paypal®, ou par tout autre moyen approprié.

Quant à l'utilisateur conducteur, il peut choisir de recevoir une participation aux frais de transport. Il saisit alors ses coordonnées bancaires, son adresse électronique pour le système Paypal®, etc., en fonction des modules de paiement disponibles.

En outre, il peut être prévu une vérification ou validation de l'identité du piéton ou du conducteur, par exemple, en croisant les données personnelles avec celles d'un autre système ou d'un autre site web, comme le fait par exemple l'application Airbnb® en se référant au site LinkedIn® ou à celui de Facebook®.

L'inscription est alors achevée et le piéton ou le conducteur dispose d'un compte utilisateur.

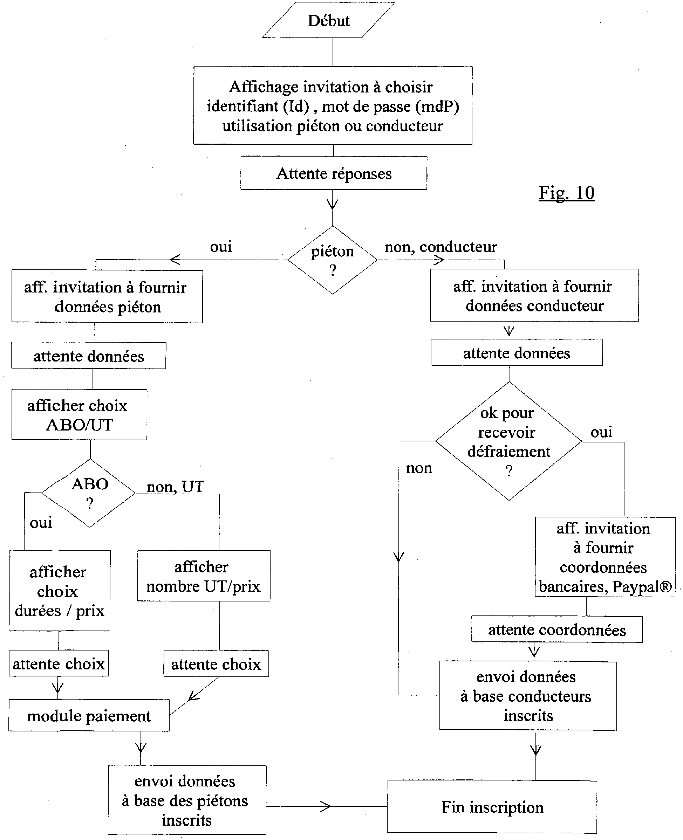

Un exemple d'ordinogramme détaillant les étapes des inscriptions préalables est représenté sur la figure 10.

### Utilisation courante - Principe de gestion des déplacements

L'invention est mise en oeuvre de manière optimale lorsque l'utilisateur piéton ou conducteur a téléchargé et installé sur son terminal TP ou TV une application mettant en oeuvre l'invention.

L'utilisateur lance ou ouvre l'application. Suivant la configuration qu'il a choisie, il peut saisir son identifiant et son mot de passe. Le système le reconnaît et détermine alors immédiatement s'il est un piéton ou un conducteur et l'application se met dans le mode correspondant, piéton ou conducteur.

Bien entendu, l'utilisateur peut avoir configuré son application pour n'avoir à retaper à chaque fois que son mot de passe, voire pour n'avoir rien à saisir.

L'utilisateur piéton ou conducteur saisit ou dicte ensuite sa destination DP ou DV et fournit des données personnelles fraîches le concernant, par exemple en faisant tout simplement un « selfie ».

Un des points forts de l'invention est que l'utilisateur n'a ensuite plus grand-chose à faire, à part accepter/refuser les prises en charge qui lui sont proposées.

### Application en mode habituel piéton

L'application commande le terminal TP du piéton pour qu'il envoie au serveur un signal de demande de prise en charge. Celle comprend normalement, l'identifiant de l'utilisateur, sa position actuelle, sa destination et des données personnelles fraîches le concernant, par exemple, un « selfie » qu'il vient de faire.

Si l'utilisateur piéton utilise la formule à abonnement, le serveur vérifie si l'abonnement de l'utilisateur piéton a expiré ou non. Dans l'affirmative, le serveur S envoie au terminal TP une proposition de renouvellement d'abonnement ainsi qu'une proposition de passer à la formule à unités de transport, en lui indiquant le nombre minimal d'unités de transport à acheter qu'il vient de calculer à partir de la position initiale GLP et la destination DP. Le serveur S gère ensuite la communication avec le terminal TP nécessaire au paiement (module de paiement, etc.). En cas d'achat d'unités de transport (UT), il vérifie que le nombre d'unités de transport achetées est supérieur ou égal au nombre minimal précité. Dans la négative, il refait les propositions susmentionnées.

Si l'utilisateur piéton utilise la formule à unités de transport, le serveur calcule la distance entre la position initiale GLP du piéton et sa destination DP et le nombre minimal d'unités de transport. Il compare ensuite ce nombre au nombre d'unités de transport restant sur le compte de l'utilisateur et en cas d'infériorité, propose à l'utilisateur de racheter des unités, en lui mentionnant le nombre minimal qu'il vient de calculer. Il vérifie que le nombre d'unités de transport achetées est supérieur au nombre minimal précité. Dans la négative, il réitère la proposition susmentionnée et propose aussi au piéton de passer à la formule à abonnement. Le serveur S gère ensuite la communication avec le terminal TP nécessaire au paiement (module de paiement, etc.).

Le piéton n'est pas censé se déplacer, car tout déplacement peut le faire s'éloigner de l'itinéraire du véhicule et il risque alors de ne plus pouvoir être pris en charge s'il se trouve au-delà de la distance dmax.

Néanmoins, on peut prévoir que l'application gère le terminal TP pour qu'il communique régulièrement sa position courante au serveur S.

Le terminal TP attend ensuite, de la part du serveur S, un signal de possibilité de prise en charge. Une fois ce signal reçu, il émet un signal sonore et/ou visuel et/ou une vibration à destination du piéton, et il affiche les données personnelles fraîches relatives au conducteur (photo...) ainsi qu'éventuellement la ou les évaluations (femme/homme) du conducteur, le nombre de transport ou les nombres de transports (femme/homme) effectués. Le terminal TP affiche aussi une demande d'acceptation ou de refus de la prise en charge et attend. Si le piéton refuse la prise en charge, le terminal communique l'information au serveur qui va rechercher une nouvelle compatibilité et proposer un nouveau conducteur. Le piéton doit donc attendre un nouveau signal de possibilité de prise en charge.

Si le piéton accepte la prise en charge, le terminal TP communique l'information au serveur et attend ensuite que le serveur S lui envoie un signal sonore et/ou visuel et/ou une vibration d'invitation à monter dans le véhicule, comportant des informations relatives au véhicule (photo, couleur, type, modèle...) et les données personnelles fraîches concernant le conducteur du véhicule (photo... afin que le piéton puisse identifier à la fois le véhicule et le conducteur qui vont le prendre en charge. Ces informations sont communiquées par le terminal TP de manière visuelle, sonore et/ou vibrante au piéton. Elles permettent d'augmenter la sécurité du système. En effet, si le piéton constate que les données du véhicule ou les données personnelles fraîches (« selfie »...) du conducteur sont différentes de celles qui lui avaient été annoncées, soit il ne s'agit pas du bon véhicule, soit le conducteur a changé ou a falsifié son apparence, dans ce cas le piéton peut tout simplement refuser de monter dans le véhicule.

Le terminal TP attend ensuite que le piéton l'informe, en appuyant sur une touche du clavier, en cliquant sur l'écran du terminal si celui-ci est tactile, et/ou vocalement, qu'il est bien monté à bord du véhicule et envoie alors au serveur S un signal de montée dans le véhicule.

Puis, le véhicule démarre et se dirige vers sa destination DV. Il passe alors par le point PTmin ou rejoint sa destination DV. Le piéton descend alors normalement du véhicule. Le terminal TP attend que le piéton l'informe, en appuyant sur une touche du clavier, en cliquant sur l'écran si celui-ci est tactile, et/ou vocalement, qu'il est bien descendu du véhicule V. Le terminal TP envoie ensuite au serveur S un signal piéton de fin de transport.

On peut aussi prévoir qu'avant la descente du piéton, le terminal TP de celui-ci reçoive du serveur S un signal d'arrivée à destination et communique cette information de manière visuelle, sonore et/ou vibrante au passager. Cette information viendra confirmer l'annonce faite par le conducteur d'arrivée du piéton à sa destination DP ou à une distance inférieure à dmax de celle-ci.

L'application peut ensuite se refermer.

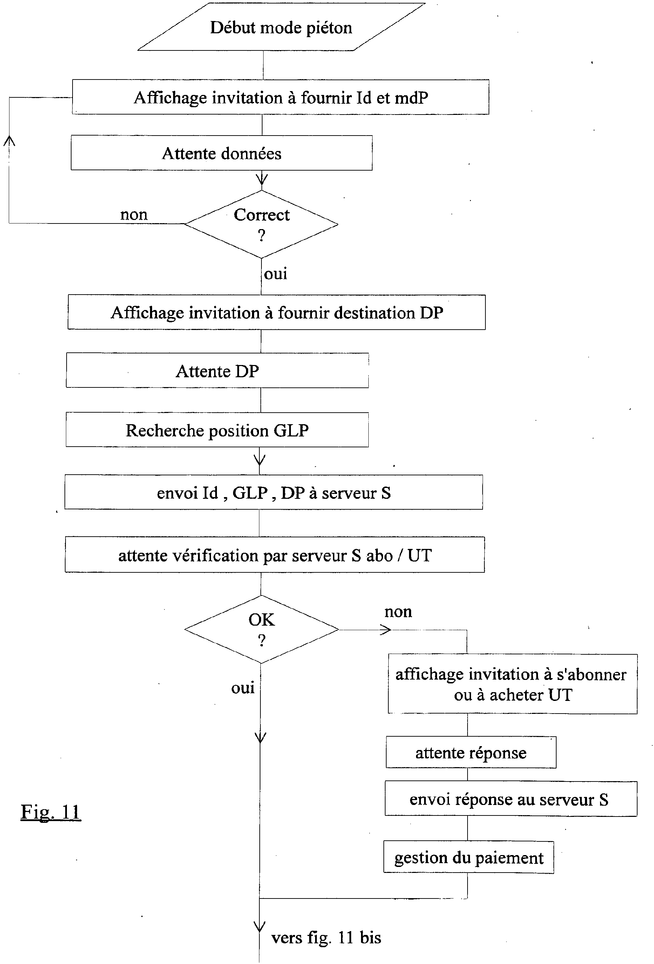

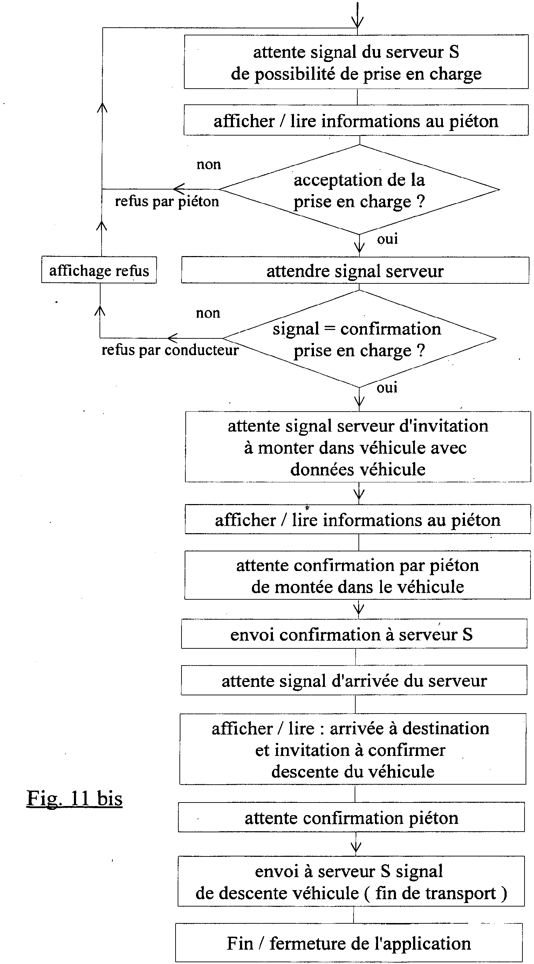

Un exemple d'ordinogramme détaillant les étapes du mode piéton de l'application est représenté sur les figures 11 et 11bis.

### Application en mode habituel conducteur

L'application commande le terminal TV du véhicule ou du conducteur pour qu'il envoie au serveur S un signal d'offre de prise en charge. Celui-ci comprend normalement, l'identifiant de l'utilisateur, sa position actuelle, sa destination DV et des données personnelles fraîches le concernant, par exemple, un « selfie » qu'il vient de faire.

L'application gère le terminal TP pour qu'il communique régulièrement sa position courante au serveur S.

Le terminal TV attend ensuite, de la part du serveur S, un signal de possibilité de prise en charge. Une fois ce signal reçu, il émet un signal sonore et/ou visuel et/ou une vibration à destination du conducteur, afin d'informer celui-ci qu'il peut prendre quelqu'un en charge. Il affiche les données personnelles fraîches relatives au piéton (photo...) ainsi qu'éventuellement sa ou ses évaluations (femme/homme), le nombre de transport ou les nombres de transports (femme/homme) dont il a bénéficié. Le terminal TV affiche aussi une demande d'acceptation ou de refus de la prise en charge et attend. Si le conducteur refuse la prise en charge, le terminal TV communique l'information au serveur qui va informer le piéton, rechercher une nouvelle compatibilité et proposer un nouveau piéton au conducteur. En attendant, le conducteur peut rouler et continuer à se diriger vers sa destination DV.

La possibilité de prise en charge proposée au conducteur peut éventuellement indiquer de quel type de compatibilité il s'agit, c'est-à-dire si le conducteur va devoir emmener le piéton jusqu'à la destination du véhicule V, ou le déposer à un point intermédiaire PTmin de son itinéraire.

Le terminal TV attend ensuite que le serveur S lui envoie un signal d'arrêt sonore et/ou visuel et/ou vibratoire pour laisser monter un piéton, comportant les données personnelles fraîches relatives au piéton (photo...). Ces données sont communiquées par le terminal TV au conducteur. On peut prévoir que le terminal TV émette un signal de préférence à courte portée, par exemple du type Bluetooth® à un gyrophare disposé sur le capot du véhicule V et émettant une lumière particulière, verte par exemple, afin de ne pas être confondu avec d'autres véhicules (police, ambulance, etc.). On peut aussi prévoir que le terminal TV actionne l'avertisseur sonore du véhicule V ou les phares du véhicule (appel de phares, feux de détresse...), afin que le piéton P puisse le repérer.

Etant donné que le véhicule V se trouve à une distance inférieure ou égale à dmax du piéton, celui-ci n'a aucune difficulté à le localiser.

Grâce aux données personnelles fraîches concernant le piéton fournies par le serveur S, le conducteur peut s'assurer qu'il s'agit bien de la bonne personne. En effet, par exemple si la photo du piéton ne correspond pas à celle qui a été communiquée lors de la proposition de prise en charge, il doit y avoir une erreur ou un piège et le conducteur peut en pas déverrouiller les portes de son véhicule.

Le terminal TV attend ensuite que le conducteur l'informe, en appuyant sur une touche du clavier ou en cliquant sur l'écran du terminal si celui-ci est tactile, et/ou vocalement, que le piéton est bien monté à bord du véhicule, puis il envoie au serveur S un signal conducteur de prise en charge.

Ensuite, si on se trouve dans le cas d'une compatibilité de type 1, le terminal TV attend de la part du serveur S un signal d'arrêt pour laisser descendre le passager. Le terminal TV communique alors cette information de manière sonore, visuelle et/ou vibrante au conducteur.

Eventuellement, le terminal TV attend que le conducteur l'informe, en appuyant sur une touche du clavier ou en cliquant sur l'écran si celui-ci est tactile, et/ou vocalement, que le piéton est bien descendu. Le terminal TV envoie alors au serveur S un signal de fin de transport.

Si la compatibilité est de type 2, le véhicule V n'étant pas arrivé à destination, il peut encore éventuellement prendre un nouveau passager. Le terminal TV revient donc à l'étape d'attente d'un signal de possibilité de prise en charge que le serveur S peut lui envoyer ou éventuellement d'un signal d'arrivée à destination. Dans ce cas, il communique cette information de manière visuelle, sonore et/ou vibrante au conducteur et ferme l'application.

Bien entendu, si le véhicule est prévu pour transporter une deuxième personne, le terminal TV peut recevoir, avant d'avoir déposé le premier passager, un deuxième signal de possibilité de prise en charge en vue d'emmener cette deuxième personne à sa destination DV ou à un point PTmin intermédiaire. Comme pour la première personne, le véhicule peut accepter ou refuser cette deuxième prise en charge. En cas d'acceptation, le serveur S traite alors parallèlement la prise en charge et le transport du 2^{ème} passager de la même manière que s'il s'agissait un premier passager. Il va de soi que ce deuxième passager n'a pas forcément le même type de compatibilité que le premier passager et qu'il peut même, le cas échéant, descendre avant le premier passager.

Il en va de même si le véhicule peut transporter un troisième passager ou encore d'autres passagers.

Il est évident qu'après avoir déposé un passager, le conducteur peut fermer son application s'il ne souhaite plus transporter de passagers.

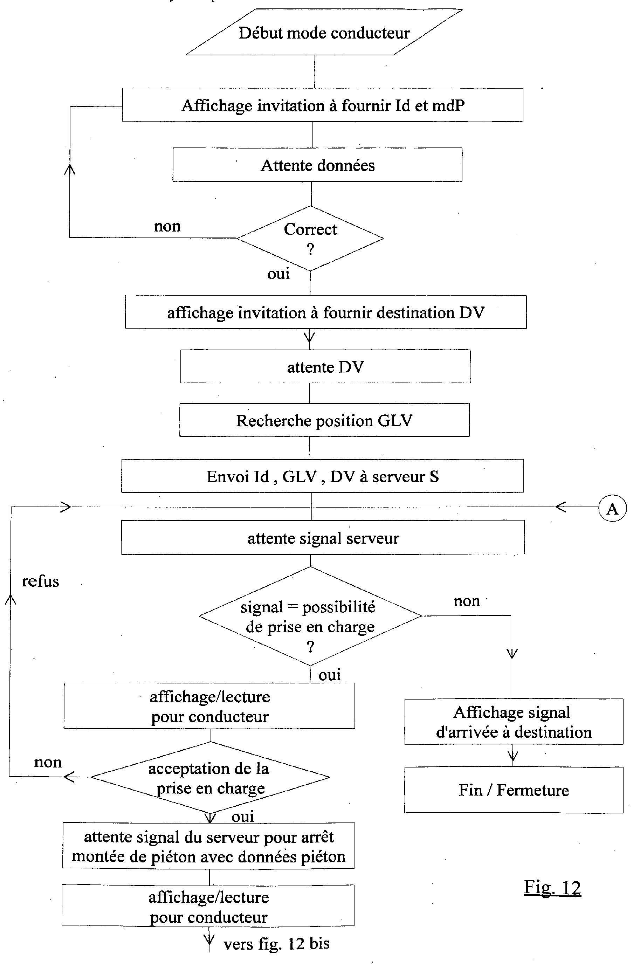

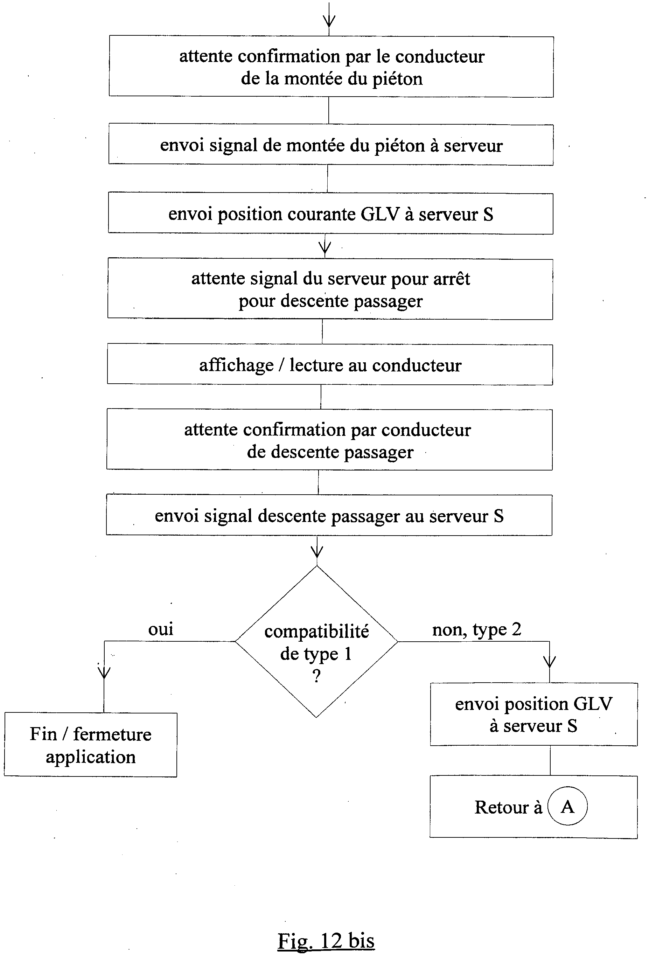

Un exemple d'ordinogramme détaillant les étapes du mode conducteur de l'application est représenté sur les figures 12 et 12bis.

### Fonctionnement global du serveur S

Le serveur S peut fonctionner à la fois dans un mode de gestion des inscriptions des utilisateurs piétons et des utilisateurs conducteurs et dans un mode de gestion du trafic, ces modes pouvant fonctionner successivement ou parallèlement.

### Mode de gestion des inscriptions

Une fois démarré, le serveur S peut attendre l'arrivée d'une demande d'inscription d'un piéton P. Il communique alors avec le terminal TP du piéton P pour recevoir les informations relatives au piéton et au paiement. Il stocke ensuite les données relatives au piéton P dans la base des piétons P inscrits.

Puis le serveur S attend l'arrivée d'une demande d'inscription d'un véhicule V. Il communique ensuite avec le terminal TV de ce véhicule pour recevoir les informations relatives au conducteur du véhicule et les informations bancaires ou Paypal®. Il stocke ensuite les données relatives au véhicule P et à son conducteur dans la base des conducteurs inscrits.

Les détails de l'exécution des inscriptions préalables ont déjà été décrits précédemment et illustrés par l'ordinogramme de la figure 10.

### Phase de gestion du trafic

Le serveur S attend de recevoir une demande de prise en charge de la part d'un piéton P, chaque demande comprenant au moins la position initiale GLP du piéton, ou plutôt, de son terminal TP, et sa destination DP.

Comme il s'agit d'une demande de prise en charge, cela signifie que le piéton P est déjà dans la base des piétons P inscrits. Le serveur S consulte alors cette base pour savoir si son abonnement est encore valable ou s'il lui reste des unités de transport. Dans la négative, il gère la communication avec le terminal Tp du piéton, pour permettre à celui-ci d'avoir à nouveau accès au système, soit en renouvelant son abonnement, soit en achetant des unités de transport.

Le serveur S stocke ensuite le piéton P dans sa base des piétons P demandeurs de prise en charge.

Le serveur S attend de recevoir une demande d'offre de prise en charge de la part d'un véhicule V, chaque offre comprenant la position courante GLV du véhicule, ou plutôt de son terminal TV intégré (ou appartenant au conducteur), ainsi que la destination DV du véhicule V.

Comme il s'agit d'une demande d'offre de prise en charge, cela signifie que le conducteur et son véhicule V sont déjà dans la base des véhicules V inscrits.

Le serveur S stocke ensuite le véhicule V dans sa base des véhicules offreurs de prise en charge.

En répétant ces opérations au fur et à mesure qu'il reçoit des demandes et des offres de prise en charge, le serveur S alimente les bases correspondantes.

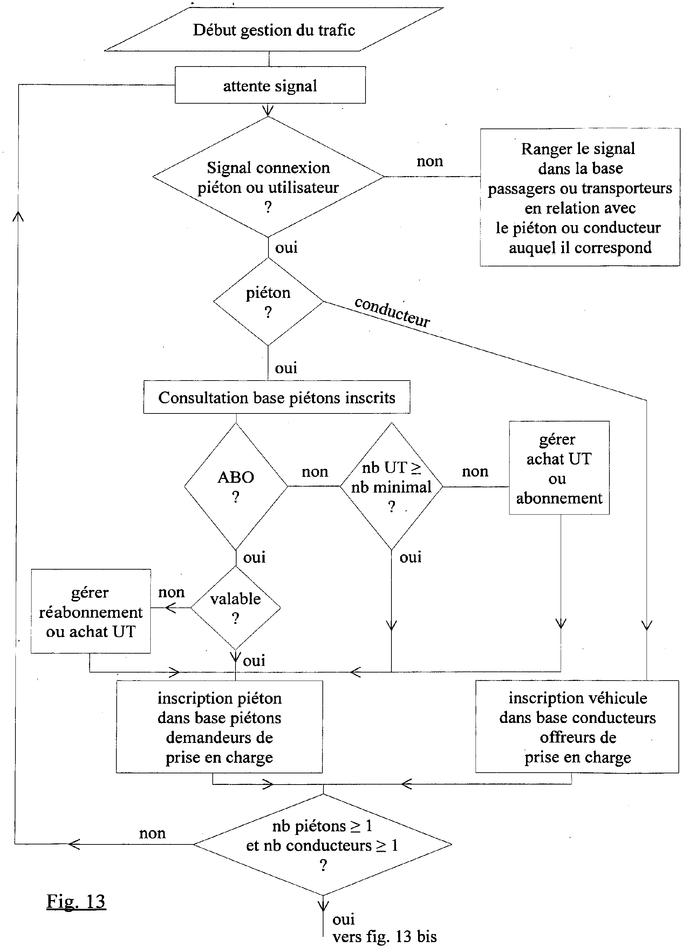

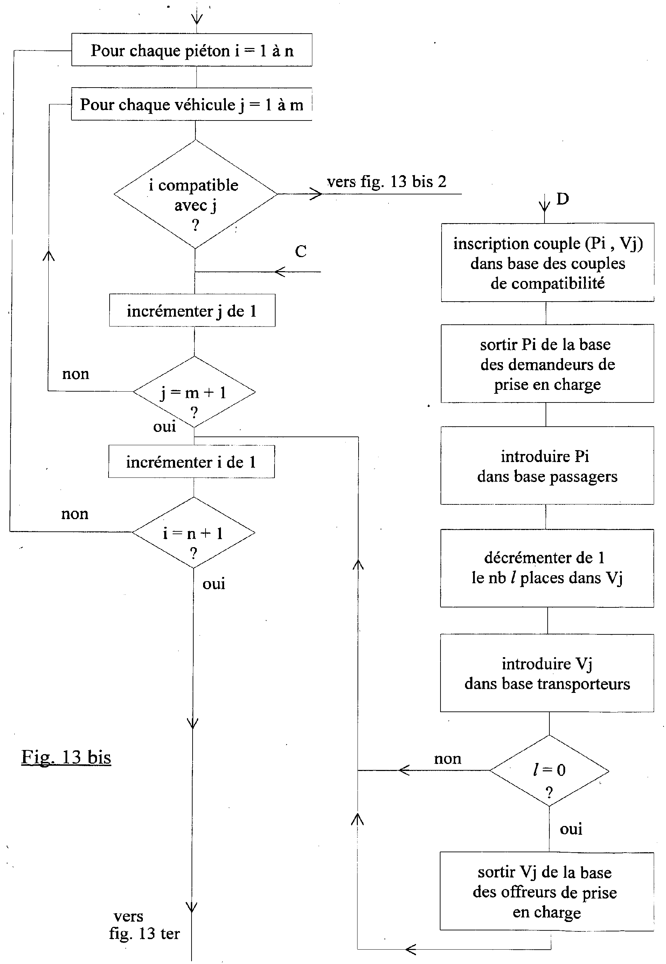

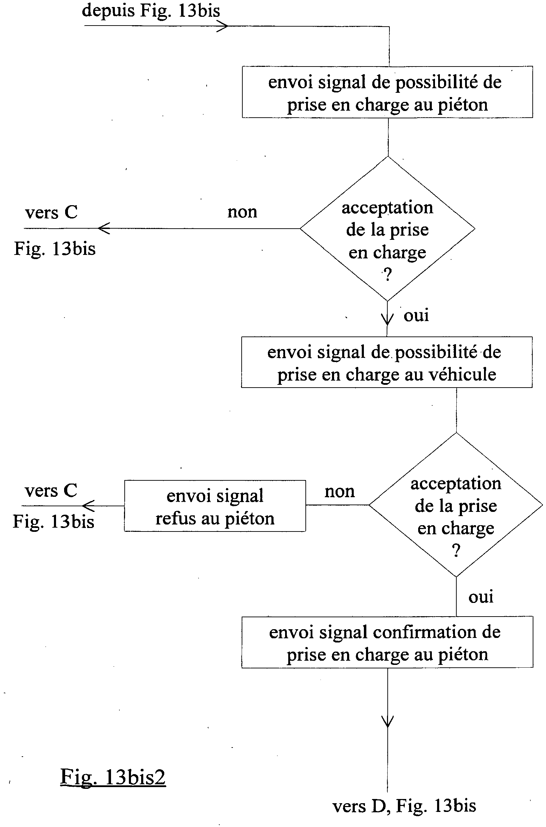

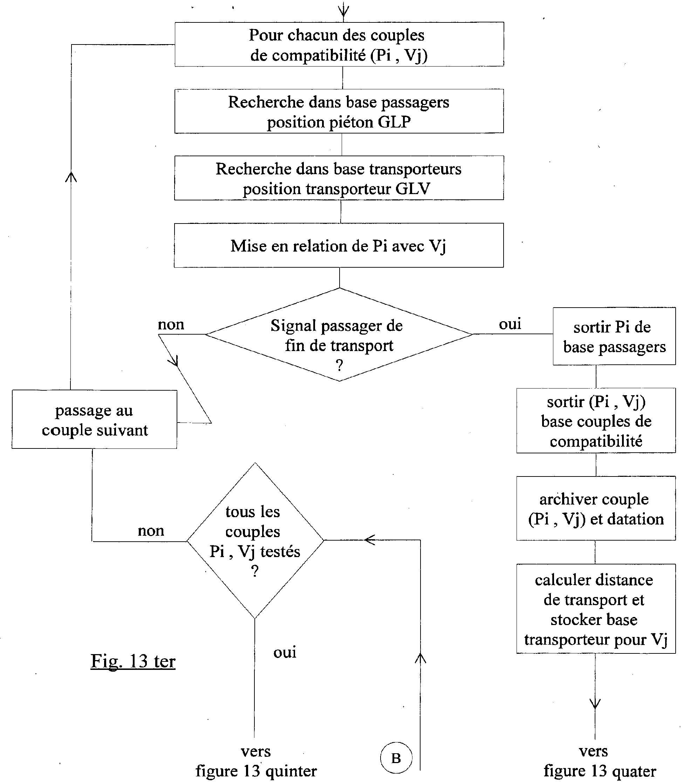

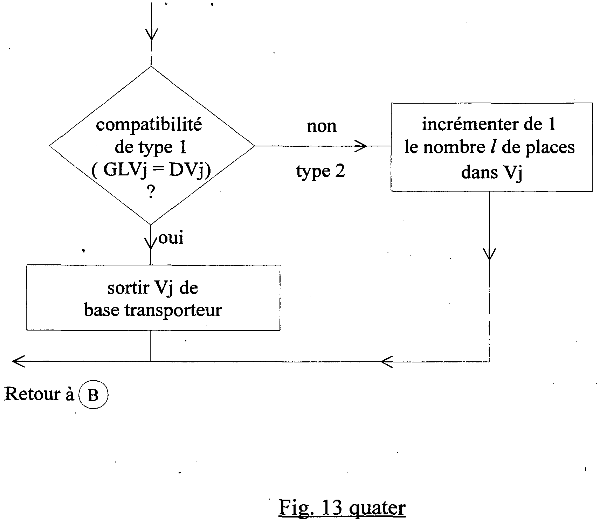

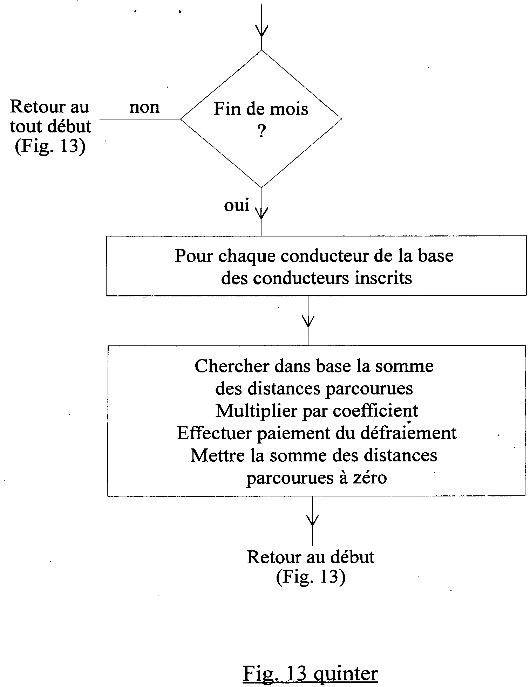

Cette manière d'alimenter les bases de demandeurs et d'offreurs de prise en charge est illustrée par la partie d'ordinogramme visible sur la figure 13.

S'il y a déjà au moins un piéton P demandeur de prise en charge et au moins un véhicule V offreur de prise en charge, on peut déjà savoir s'il y a compatibilité entre eux.

Ensuite, le serveur S prend un par un, tous les piétons P se trouvant dans la base des piétons P demandeurs de prise en charge, et recherche pour chacun d'entre eux un véhicule compatible.

Pour chaque piéton P, il va examiner tous les véhicules présents dans la base des véhicules V offreurs de prise en charge et voir si l'un de ces véhicules a un itinéraire compatible avec lui, c'est-à- dire qu'il regarde d'abord si le véhicule V va passer suffisamment près du piéton P pour pouvoir s'arrêter et le faire monter. Si ce n'est pas possible, cela veut dire qu'il y a incompatibilité des itinéraires, il ne sert donc à rien d'examiner les destinations du piéton DP et du véhicule DV et on peut alors passer au véhicule suivant.

Mais si le véhicule V va passer à proximité du piéton P, il va pouvoir le faire monter à bord. Le serveur S détermine alors s'il pourra l'emmener jusqu' à sa destination DV ou le déposer en cours de route, quelque part en un point PTmin de l'itinéraire IV du véhicule V.

Cette détermination de compatibilité a déjà été décrite plus haut et illustrée par les figures 8 et 8bis.

L'itinéraire n'est pas forcément rectiligne et son calcul peut se faire de diverses manières, en accédant à une mémoire géographique ou car une carte électronique prévue pour le calcul des itinéraires, comme on sait le faire depuis longtemps (cf. FR 2 894 364, les demandes de brevet citées en introduction, Google® Maps, applications Michelin®, Le Routard®, Citymapper™, Here™...) ou en cherchant des données fournies par d'autres systèmes (www.route4me.com, etc.).

Si un véhicule V a un itinéraire compatible avec le piéton P considéré, le serveur S forme un couple avec ces piéton et véhicule, appelé couple de compatibilité (Pi, Vj), et il stocke ce couple dans la base des couples de compatibilité. Pi est ici le piéton considéré, parmi les n piétons présents dans la base des piétons demandeurs de prise en charge et Vj est le véhicule compatible ou du moins le premier que serveur a trouvé, parmi les m véhicules contenus dans la base des véhicules offreurs de prise en charge.

Si aucun véhicule V n'a un itinéraire compatible avec le piéton P, celui-ci devra patienter jusqu'à ce qu'un véhicule à itinéraire compatible fasse son apparition dans la base des véhicules offreurs de prise en charge.

En attendant, le serveur S passe au piéton suivant et examine à nouveau tous les véhicules, pour essayer d'en trouver un dont l'itinéraire soit compatible.

Ainsi, pour la détermination de compatibilité, i varie de 1 à n et j varie de 1 à m.

Une fois qu'un piéton fait partie d'un couple de compatibilité, il n'est plus demandeur de prise ne charge (puisqu'il a trouvé...) et il peut donc être sorti de la base des piétons demandeurs de prise en charge et introduit dans la base des passagers.

Pour les véhicules, la situation est un peu plus compliquée car un véhicule peut transporter ou accepter de transporter plusieurs passagers ex-piétons en même temps. Si on appelle « ℓ » le nombre de passagers que le conducteur du véhicule est disposé à prendre en charge en même temps, une fois qu'un couple de compatibilité a été formé par ce véhicule avec un piéton, il faut décrémenter de 1 la valeur de ℓ. Ce n'est que lorsque f est nul que le véhicule peut être supprimé de la base des véhicules offreurs de prise ne charge. Le véhicule est introduit dans la base des transporteurs.

Une fois que le véhicule V a pris un passager, si le nombre f est encore supérieur ou égal à 1, il peut en prendre un autre qu'il déposera avant, après ou au même moment que le premier passager. Il reste donc dans la base des véhicules offreurs de prise en charge.

En d'autres termes, un véhicule peut être en même temps présent dans la base des véhicules offreurs de prise en charge et dans celle des transporteurs.

Ainsi, le serveur S passe en revue tous les piétons et tous les véhicules, pour former, à chaque fois que cela est possible, des couples de compatibilité (piéton, véhicule).

Les piétons qui n'ont pas trouvé preneur restent provisoirement dans la base des piétons demandeurs de prise en charge.

De même, les véhicules pour lesquels le serveur S n'a trouvé aucun piéton restent dans la base des piétons. Provisoirement, car les bases des piétons demandeurs et des conducteurs offreurs sont enrichies régulièrement et de nouvelles compatibilités peuvent apparaître.

Cette manière de former des couples de compatibilité est illustrée par la partie d'ordinogramme de la figure 13bis.

Le traitement des demandes d'acceptation/refus des prises en charge est illustré par la partie d'ordinogramme faisant l'objet de la figure 13bis2.

Ensuite, pour tous les couples de compatibilité formés, le serveur S peut gérer les mises en relation. Concrètement, pour chaque couple de compatibilité (Pi,Vj), le serveur S devient l'intermédiaire des communications entre le piéton Pi et un véhicule Vj, comme cela a été expliqué précédemment.

Le principe des mises en relation a déjà été expliqué précédemment et illustré par les figures 9 et 9 bis.

Une fois qu'un passager a été déposé et que son terminal TP a transmis au serveur S un signal piéton de fin de transport, le serveur S peut calculer la distance de transport correspondante qui a été parcourue et l'additionner à la somme des distances parcourues se trouvant déjà dans la base des conducteurs inscrits, en relation avec le conducteur qui vient d'effectuer ce transport. La nouvelle somme est ensuite stockée dans la base des conducteurs inscrits et elle servira ultérieurement au défraiement du conducteur Pi.

Une fois qu'un passager a été déposé, le couple de compatibilité qu'il formait avec le véhicule Vj, (Pi, Vj) peut être sorti de la base des couples de compatibilité.

A ce stade, on peut prévoir que les informations relatives à chaque couple de compatibilité, comme le moment (date, heure, minute) de leur formation et le moment (date, heure, minute) de leur sortie de la base des couples de compatibilité soient stockées dans un mémoire d'archivage, qui pourra éventuellement être consulté par la police ou la justice en cas de délit ou de crime, etc., ou pour l'établissement de statistiques sur le fonctionnement du système.

La généralisation des mises en relation est illustrée par la partie d'ordinogramme des figures 13ter et 13quater, car les figures 13 à 13quinter illustrent en fait le procédé selon l'invention de gestion des déplacements d'un ensemble Ep de piétons (P) au moyen d'un ensemble Ev de véhicules (V).

Le serveur peut être configuré pour effectuer périodiquement, par exemple une fois par mois, de préférence en fin de mois et avantageusement aux heures creuses, c'est-à-dire normalement en pleine nuit, un défraiement des conducteurs. Pour cela, il consulte la base des conducteurs inscrits et pour chaque conducteur de cette base, il multiplie par exemple la somme des distances parcourues par un coefficient de participation aux frais.

L'argent collecté lors des abonnements ou achats d'unités de transport des piétons inscrits, est normalement sur un compte (bancaire ou Paypal®, etc.). Le serveur S peut rechercher dans la base des conducteurs inscrits les données de paiement de chaque conducteur et virer, du compte précité vers le compte de chaque conducteur, la participation aux frais qui revient à ce dernier.

Ce calcul des participations financières est illustré par la partie d'ordinogramme de la figure 13quinter.

Bien entendu, il est possible de prévoir une gratuité totale du système, mais il est peu probable que le système connaisse un grand succès auprès des conducteurs si ceux-ci ne reçoivent pas une participation aux frais que le transport leur a occasionnés.

Ainsi, en utilisation courante, c'est-à-dire une fois l'application installée sur un terminal TP et le piéton P inscrit, à chaque fois que celui-ci aura besoin d'être transporté, il n'aura qu'à ouvrir l'application, saisir ou dicter sa destination, faire un « selfie », à attendre qu'on lui propose une prise en charge, accepter/refuser cette prise en charge, puis une fois qu'il aura accepté une proposition (et que celle-ci aura été acceptée par le conducteur du véhicule proposé), attendre qu'on l'invite à rejoindre le véhicule qui lui sera indiqué pour monter dedans et être transporté à sa destination ou à proximité de celle-ci.

Quant au conducteur, en utilisation courante, c'est-à-dire une fois l'application installée sur un terminal TV et le conducteur inscrit, à chaque fois que celui-ci sera disposé à transporter un piéton, il n'aura qu'à ouvrir l'application, saisir ou dicter sa destination, faire un « selfie », à attendre qu'on lui propose une prise en charge, accepter/refuser cette prise en charge, puis une fois qu'il aura accepté une proposition, à attendre qu'on lui demande de s'arrêter pour faire monter cette personne, puis à l'emmener à sa destination DV ou la déposer à un endroit intermédiaire PTmin situé sur son itinéraire IV et que le serveur S lui indiquera.

### Variantes & compléments

Le mode piéton de l'application, qui offre de préférence la possibilité de modifier les préférences du piéton, notamment la distance dmax, peut aussi prévoir une distance dmax1 pour la prise en charge initiale et une distance dmax2 supérieure pour l'arrivée à destination. On peut en effet envisager que pour un transport d'une zone urbaine à densité de véhicules élevée, vers une destination dans une zone rurale éloignée, le piéton ne souhaite pas se déplacer sur une grande distance en ville mais est prêt à marcher davantage une fois en zone rurale.

Le mode piéton de l'application peut aussi prévoir dans ses préférences une liste rouge de conducteurs, de façon à éviter qu'il ne soit proposé au piéton de voyager avec certaines personnes. Par exemple, on peut imaginer qu'une femme ne souhaite pas être prise ne charge par un véhicule conduit par un homme, etc.

De même, le mode conducteur de l'application peut aussi exclure certaines catégories de personnes dans ses préférences.

Les modes piéton ou conducteur de l'application peuvent aussi exclure la présence d'un animal (chien, furet, etc.).

On peut prévoir aussi que le programme en mode piéton ou conducteur permette une annulation de la prise en charge prévue ou cette annulation d'effectue automatiquement en cas de fermeture brutale du programme. Dans ce cas, il est souhaitable que le serveur informe l'autre partenaire de voyage.

Il est possible qu'un passager, pour une raison ou une autre, demande au conducteur de le laisser descendre du véhicule plus tôt. Dans ce cas, on peut envisager que le terminal TP du passager puisse informer le serveur de la fin du transport avant l'arrivée à destination, de manière à ce que le conducteur puisse quand même être défrayé sur la base du trajet plus court que prévu parcouru en commun avec le passager ex-piéton.

On peut prévoir que les terminaux simplifient la saisie ou la dictée d'une destination, en utilisant des mots-clés, par exemple, « Tour » pour la Tour Eiffel (Paris, France), « Coli » pour le Colisée (Rome, Italie), « Jet » pour le jet d'eau de Genève (Suisse), « Copa » pour le quartier Copacabana (Rio de Janeiro, Brésil », etc.

Dans les modes piéton ou conducteur, la vérification du couple identifiant/mot de passe est effectuée en local, c'est-à-dire au niveau du terminal TP ou TV, mais on peut aussi prévoir qu'elle soit effectuée par le serveur S.

On peut aussi prévoir que les applications ou le serveur S soient aptes à gérer un module ou une sous-routine de récupération ou de recréation de mot de passe.

## Revendications

1. Procédé de facilitation des déplacements d'un ensemble Ep de piétons (P) munis chacun d'un terminal portable (TP) au moyen d'un ensemble Ev de véhicules (V) associés ou munis chacun d'un terminal (TV), les terminaux (TP,TV) comportant ou étant associés à des dispositifs de détection de leurs positions courantes GLP, GLV comprenant les étapes suivantes :
- envois par des piétons (P) de demandes de prise en charge, chaque demande comprenant au moins la position courante GLP et la destination (DP) du piéton concerné ;
- envois par des véhicules (V) ou leurs conducteurs d'offres de prise en charge, chaque offre comprenant au moins la position courante GLV et la destination (DV) du véhicule concerné ;
- réception par un serveur (S) des demandes et des offres de prise en charge ;
- constitution par le serveur (S) d'un ensemble Ep de piétons demandeurs (P),
- constitution par le serveur (S) d'un ensemble Ev de véhicules offreurs (V),
- recherche par le serveur (S), pour chacun des piétons (Pi) de l'ensemble Ep, d'un véhicule (Vj) de l'ensemble Ev ayant un itinéraire compatible avec celui du piéton (Pi) et formation de couples de compatibilité [piéton (Pi) ; véhicule (Vj)] ;
- pour chaque couple de compatibilité [piéton (Pi) ; véhicule (Vj)] :
• envoi par le serveur (S) au piéton (Pi) de chaque couple de compatibilité (piéton (Pi) ; véhicule (Vj)), un signal de possibilité de prise en charge et d'une demande d'acceptation/refus de la prise en charge ;
• en cas d'envoi par le piéton (Pi) au serveur (S) d'une réponse de refus, retour à l'étape précédente de recherche du serveur (S) ;
• en cas d'envoi par le piéton (Pi) d'une réponse d'acception, envoi par le serveur (S) au véhicule (Vj) ou à son conducteur, d'un signal de possibilité de prise en charge et d'une demande d'acceptation/refus de la prise en charge ;
• en cas d'envoi par le véhicule (Vj) ou son conducteur d'une réponse de refus au serveur (S), retour à l'étape précédente de recherche du serveur (S) et envoi éventuel par le serveur (S) au piéton (Pi) d'un signal de refus de prise en charge ;
• en cas d'envoi par le véhicule (Vj) ou son conducteur au serveur (S) d'une réponse d'acception, envoi éventuel par le serveur (S) au piéton (Pi) d'un signal de confirmation de prise en charge ;
**caractérisé en ce que** pour chaque couple de compatibilité [piéton (Pi) ; véhicule (Vj)] :
- chaque demande de prise en charge comprend des données personnelles fraîches (DFPi) relatives au piéton (Pi) ;
- chaque offre de prise en charge comprend des données personnelles fraîches (DFVj) relatives au conducteur du véhicule (Vj) ;
**en ce que**
- le signal de possibilité de prise en charge envoyé au piéton (Pi) comprend lesdites données personnelles fraîches (DFCj) relatives au conducteur du véhicule (Vj) ;
- le signal de possibilité de prise en charge envoyé au conducteur du véhicule (Vj) comprend lesdites données personnelles fraîches (DFPi) relatives au piéton (Pi).

2. Procédé selon la revendication 1, comprenant en outre :
- une étape au cours de laquelle chaque piéton (Pi) est pris ou se prend en photo au moyen de son terminal (TP) et les données personnelles fraîches (DFPi) relatives au piéton (Pi) comprennent cette photo ;
- une étape au cours de laquelle chaque conducteur de véhicule (Vj) est pris ou se prend en photo au moyen du terminal (TV) et les données personnelles fraîches (DFVj) relatives au conducteur du véhicule (Vj) comprennent cette photo ;
- le signal de possibilité de prise en charge envoyé au véhicule (Vj) ou à son conducteur comprend en outre éventuellement l'indication du sexe du piéton (Pi) ; et
- le signal de possibilité de prise en charge envoyé au piéton (Pi) comprend en outre éventuellement l'indication du sexe du conducteur du véhicule (Vj).

3. Procédé selon la revendication 1 ou 2, dans lequel les demandes d'acceptation/refus des prise en charge sont valables pendant une durée déterminée ; si à l'expiration de cette durée, le piéton (Pi) ou le conducteur du véhicule (Vj) n'a pas répondu, il est considéré que sa réponse est négative et il y a retour à l'étape de recherche par le serveur de compatibilités et de formation de couples de compatibilité [piéton (Pi) ; véhicule (Vj)].

4. Procédé selon l'une des revendications 1 à 3, dans lequel la recherche par le serveur (S), pour chacun des piétons (Pi) de l'ensemble Ep, d'un véhicule (Vj) de l'ensemble Ev ayant un itinéraire (IVj) compatible avec celui du piéton (Pi), et la formation de couples de compatibilité [piéton (Pi) ; véhicule (Vj)] s'effectue de la manière suivante :
- pour chaque piéton (Pi) de l'ensemble des n piétons Ep et en allant du premier (VI) au dernier véhicule (Vm) de l'ensemble En :
- calcul par le serveur (S), pour chacun des points de l'itinéraire (IVj) du véhicule (Vj), de la distance d0 entre le point considéré et le piéton (Pi) et comparaison de cette distance d0 avec une distance maximale prédéterminée (dmax) ;
- si pour tous les points, la distance d0 est supérieure à (dmax), passage au véhicule suivant (Vj+1) ;
- si, pour au moins un point, la distance d0 est inférieure ou égale à la distance maximale prédéterminée (dmax) :
• calcul par le serveur (S) de la distance d1 entre la destination du piéton (DP) et celle du véhicule DVj et comparaison de cette distance d1 avec la distance maximale prédéterminée (dmax) ;
• si la distance d1 est inférieure ou égale à la distance maximale prédéterminée (dmax), formation du couple de compatibilité [piéton (Pi) ; véhicule (Vj)] et passage au piéton suivant (Pi+1) ;
• si la distance d1 est supérieure à la distance maximale prédéterminée (dmax),
▪ calcul par le serveur (S), pour chacun des points de l'itinéraire (IVj) du véhicule (Vj), de la distance d2 entre le point considéré et la destination (DP) du piéton (Pi) et comparaison de chaque distance d2 avec la distance maximale prédéterminée (dmax) ;
▪ si, pour tous les points, la distance d2 est supérieure à (dmax), passage au véhicule suivant (Vj+1) ;
▪ si, pour au moins un point (PTmin), la distance (d2) est inférieure ou égale à la distance maximale prédéterminée (dmax), mémorisation du point (PTrriin) ; formation du couple de compatibilité [piéton (Pi) ; véhicule (Vj)] et passage au piéton (Pi+1) suivant.

5. Procédé selon la revendication 4, comprenant en outre la gestion de la mise en relation par le serveur (S), pour chaque couple de compatibilité (piéton (Pi) ; véhicule (Vj)), du piéton (Pi) avec le véhicule (Vj), de la manière suivante :
- calcul par le serveur (S) de la distance courante (d3) entre le véhicule (Vj) et le piéton (Pi),
- comparaison de la distance (d3) à une distance d'arrêt (da) ;
- si la distance (d3) est supérieure à (da), retour aux étapes précédentes ;
- si la distance (d3) est inférieure ou égale à (da),
• envoi par le serveur (S) au terminal (TVj) d'un signal d'arrêt du véhicule (Vj), ce signal d'arrêt comportant les données personnelles fraîches (DFPi) relatives au piéton (Pi), telles que sa photo ;
• envoi par le serveur (S) au terminal (TPi) d'un signal l'invitant à rejoindre le véhicule (Vj) et à monter dedans, ce signal d'invitation comportant des données relatives au véhicule (Vj), telles que sa photo, ainsi que les données personnelles fraîches (DFCj) relatives au conducteur du véhicule (Vj), telles que sa photo ;
- envoi par le terminal (TPi) au serveur (S) d'un signal de montée dans un véhicule et/ou envoi par le terminal (TVj) au serveur (S) d'un signal de montée d'un piéton,
- envoi par le terminal (TVj) de sa position courante GLVj au serveur (S),
- s'il n'y a pas eu mémorisation d'un point (PTmin), comparaison par le serveur (S) de la position courante GLVj avec la destination (DVj), en cas de différence, retour à l'étape précédente d'envoi par le terminal (TVj) au serveur (S) de sa position courante GLVj; s'il y a identité, envoi éventuel par le serveur (S) au terminal (TVj) et éventuellement au terminal (TPi) d'un signal d'arrivée à destination ;
- s'il y a eu mémorisation d'un point (PTmin), comparaison par le serveur (S) de la position courante reçue avec la position (PTmin) ; s'il y a égalité, envoi par le serveur (S) au terminal (TVj) d'un signal d'arrêt pour descente de passager et éventuellement au terminal (TPi) d'un signal d'arrivée à destination ; sinon retour à l'étape précédente d'envoi par le terminal (TVj) de sa position courante GLVj au serveur (S);
- éventuellement, envoi par le terminal (TP) au serveur (S) d'un signal de fin de transport et/ou envoi par le terminal (TV) au serveur (S) d'un signal de fin de transport.

6. Procédé selon la revendication 5, dans lequel la distance d'arrêt (da) est égale à la distance maximale prédéterminée (dmax).

7. Procédé selon la revendication 5, dans lequel le serveur calcule la vitesse (VITj) du véhicule (Vj) en km/h et la distance d'arrêt est égale à la (VITj/10)².

8. Procédé selon l'une des revendications 1 à 7, dans lequel le terminal (TPi) du piéton (Pi) permet à celui-ci de modifier la distance maximale prédéterminée (dmax) et d'envoyer la valeur modifiée au serveur (S).

9. Procédé selon la revendication 5 ou selon l'une des revendications 6 à 8 dépendantes de la revendication 5, comprenant
- ledit envoi par le terminal (TP) au serveur (S) d'un signal de fin de transport et ledit envoi par le terminal (TV) au serveur (S) d'un signal de fin de transport,
- ces envois étant accompagnés d'une évaluation ECj du conducteur du véhicule (Vj) par le piéton (Pi) et d'une évaluation EPi du piéton (Pi) par le conducteur du véhicule (Vj).

10. Procédé selon la revendication 9, comprenant en outre
- le calcul par le serveur (S) d'une moyenne des évaluations du conducteur du véhicule (Vj) pour obtenir une évaluation moyenne globale EMCj du conducteur, l'incrémentation de 1 du nombre de transports qu'il a effectués et le stockage de ces informations ; et
- le calcul par le serveur (S) d'une moyenne des évaluations du piéton (Pi) pour obtenir une évaluation moyenne globale EMPi du conducteur, l'incrémentation de 1 du nombre de transports dont il a bénéficié et le stockage de ces informations.

11. Procédé selon la revendication 10, dans lequel, pour chaque couple de compatibilité [piéton (Pi) ; véhicule (Vj)] :
- chaque signal de possibilité de prise en charge envoyé à un piéton (Pi) comprend l'évaluation moyenne globale EMCj du conducteur du véhicule (Vj) et éventuellement également le nombre de transports déjà effectués et sur la base desquels cette évaluation moyenne globale EMCj a été calculée ;
- chaque signal de possibilité de prise en charge envoyé au conducteur véhicule (Vj) comprend l'évaluation moyenne globale EMPi du piéton (Pi) et éventuellement également le nombre de transports dont le piéton (Pi) a bénéficié et sur la base desquels cette évaluation moyenne globale EMPi a été calculée.

12. Procédé selon la revendication 10 ou 11, dans lequel :
- pour chaque véhicule (Vj), chaque évaluation ECj et chaque signal de fin de transport reçus par le serveur (S) sont stockés par celui-ci en relation avec le sexe du piéton (Pi) qui vient d'être transporté et le serveur (S) calcule une moyenne des évaluations attribuées pour les transports de femmes EMCFj et/ou une moyenne des évaluations reçues pour les transports d'hommes EMCHj ;
- pour chaque piéton (Pi), chaque évaluation EPi et chaque signal de fin de transport reçus par le serveur (S) sont stockés par celui-ci en relation avec le sexe du conducteur du véhicule (Vj) qui vient de la transporter et le serveur (S) calcule une moyenne des évaluations reçues pour les voyages effectués avec des conductrices EMPFi et/ou une moyenne des évaluations reçues pour les voyages effectués avec des conducteurs EMPHi ;
et dans lequel
- chaque signal de possibilité de prise en charge envoyé à un piéton (Pi) comprend la moyenne des évaluations reçues par le conducteur du véhicule (Vj) pour les transports de femmes EMCFj et éventuellement le nombre de transports de femmes effectués et/ou la moyenne des évaluations reçues pour les transports d'hommes EMCHj et éventuellement le nombre de transports d'hommes effectués; ainsi qu'éventuellement l'évaluation moyenne globale EMCj du conducteur du véhicule (Vj) et éventuellement le nombre total de transports qu'il a effectués ;
- chaque signal de possibilité de prise en charge envoyé un véhicule (Vj) ou à son conducteur comprend la moyenne des évaluations reçues par le piéton (Pi) pour les voyages effectués avec des conductrices EMPFi et éventuellement le nombre voyage effectués avec des femmes et/ou la moyenne des évaluations reçues pour les voyages effectués avec des conducteurs EMPHi et éventuellement le nombre de voyages effectués avec des hommes; ainsi qu'éventuellement l'évaluation moyenne globale EMPi du piéton (Pi) et éventuellement le nombre total de transports dont il a bénéficié.

13. Procédé selon la revendication 5 ou l'une des revendications 6 à 12 dépendante de la revendication 5, dans lequel la distance de transport du passager (Pi) par un véhicule (Vj) est mémorisée et le cas échéant additionnée aux distances de transport précédentes, un récapitulatif est effectué périodiquement pour tous les véhicules (Vj) et la distance totale de transport de chaque véhicule (Vj) pendant une période donnée sert de calcul pour le défraiement du conducteur du véhicule (Vj) concerné.

14. Procédé de gestion des déplacements d'un ensemble Ep de piétons (P) munis chacun d'un terminal portable (TP) au moyen d'un ensemble Ev de véhicules (V) associés ou munis chacun d'un terminal (TV), les terminaux (TP,TV) comportant ou étant associés à des dispositifs de détection de leurs positions courantes GLP, GLV comprenant les étapes suivantes, exécutables par les piétons (P) et les conducteurs des véhicules (V) :
- une étape préalable unique, pour chaque piéton (P) et pour chaque véhicule (V), d'inscription respectivement dans une base de piétons inscrits et une base de conducteurs inscrits puis
- pour chaque piéton (P), une multitude de répétitions de l'ensemble des étapes suivantes uniquement, par trajet :
• lancement d'un programme apte à mettre en oeuvre le procédé selon l'une des revendications 1 à 13 ;
• éventuellement, identification personnelle ;
• communication de sa destination (DP) ;
• communication de données personnels fraîches;
• éventuellement, refus d'une ou plusieurs propositions de prise en charge ;
• acceptation d'une prise en charge ;
• confirmation de la montée dans un véhicule (V) ;
• communication de la fin du transport ;
• éventuellement, évaluation du conducteur du véhicule (V) ;
- pour chaque conducteur de véhicule (V), une multitude de répétitions de l'ensemble des étapes suivantes uniquement, par trajet :
• lancement d'un programme apte à mettre en oeuvre le procédé selon l'une des revendications 1 à 13 ;
• éventuellement, identification personnelle ;
• communication de sa destination (DV) ;
• communication de données personnels fraîches;
• éventuellement, refus d'une ou plusieurs propositions de prise en charge ;
• acceptation d'une prise en charge ;
• confirmation de la montée d'un piéton (P) dans le véhicule (V) ;
• éventuellement, communication de la fin du transport ; et
• éventuellement, évaluation du piéton (P).

15. Système de facilitation des déplacements d'un ensemble Ep de piétons (P) au moyen d'un ensemble Ev de véhicules (V), comportant
- au moins un terminal (TP) destiné à un piéton (P) et comportant un dispositif de détermination de sa position courante GLP,
- au moins un terminal (TV) destiné à un véhicule (V) et comportant un dispositif de détermination de sa position courante GLV, et
- un serveur (S),
et dans lequel :
- le ou les terminal/aux (TP) et le ou les terminal/aux (TV) étant aptes et configurés pour communiquer sans fil avec le serveur (S) ;
- le serveur (S) étant apte et configuré pour communiquer sans fil avec les terminaux (TP, PV) ;
- les différentes2 configurations étant aptes à mettre en oeuvre le procédé selon l'une des revendications 1 à 13 ou le procédé selon la revendication 14.
